# EUROPÄISCHE PATENTSCHRIFT

(11) **EP 3 341 164 B1**
(45) Veröffentlichungstag und Bekanntmachung des Hinweises auf die Patenterteilung: **02.02.2022**
(21) Anmeldenummer: 16753915.4
(22) Anmeldetag: 18.08.2016
(51) Int. Cl.: B25J 15/00, B25J 15/02, B25J 15/10

(54) **ROBOTERGREIFER**
ROBOT GRIPPER
PRÉHENSEUR DE ROBOT

(30) Priorität: 28.08.2015 DE 102015216550
(43) Veröffentlichungstag der Anmeldung: 04.07.2018
(73) Patentinhaber: KUKA Deutschland GmbH, 86165 Augsburg (DE)
(72) Erfinder: BRUDNIOK, Sven, 86853 Langerringen (DE); SCHOBER, Wolfgang, 86554 Pöttmes (DE)
(74) Vertreter: Böss, Dieter Alexander
(86) Internationale Anmeldenummer: PCT/EP2016/069659
(87) Internationale Veröffentlichungsnummer: WO 2017/036812

(56) Entgegenhaltungen:
- EP-B1- 2 660 015
- DE-A1-102013 226 289
- JP-A- 2008 157 338

## Beschreibung

Die Erfindung betrifft einen Robotergreifer, aufweisend einen Greifergrundkörper, der einen Anschlussflansch aufweist, der zur Befestigung des Rotationsgreifers an einem Werkzeugflansch eines Roboterarms ausgebildet ist, des Weiteren aufweisend ein Basisglied, welches mittels eines ersten Drehgelenks, das von einem ersten Antriebsmotor automatisch verstellbar ist, um eine erste Drehachse drehbar am Greifergrundkörper gelagert ist, sowie aufweisend einen ersten Greiferfinger, der mittels eines zweiten Drehgelenks, das von einem zweiten Antriebsmotor automatisch verstellbar ist, um eine zweite Drehachse, die parallel zur ersten Drehachse ausgerichtet ist, bezüglich des Basisglieds drehbar gelagert ist und aufweisend wenigstens einen weiteren Greiferfinger.

Aus der WO 2008/083995 A1 ist eine Vorrichtung zur Qualitätskontrolle eines rotationssymmetrischen Körpers bekannt, wobei die Vorrichtung ein Handhabungssystem mit einem Greifer zum Greifen des Körpers und zum Transportieren des Körpers in eine Arbeitsposition, sowie mindestens eine elektronische Kamera zum optischen Abtasten des Körpers in der Arbeitsposition aufweist, wobei der Greifer des Handhabungssystems Greiffinger mit rotationssymmetrischen Halteelementen zum Festhalten des Körpers aufweist, wobei die Halteelemente um ihre Rotationsachsen rotierbar ausgebildet sind. Die Halteelemente der Greiffinger des Greifers sind dabei jeweils mit einem Zahnrad drehfest verbunden, wobei die Zahnräder aller Greiffinger des Greifers mittelbar über mindestens ein weiteres Zahnrad mit einem zentralen Zahnrad des Greifers in Eingriff stehen, und der Greifer einen Antriebsmechanismus aufweist, welcher das zentrale Zahnrad in eine Rotationsbewegung versetzt.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

Die JP 2008 157338 A beschreibt eine humanoide Roboterhand mit fünf Greiferfingern, von denen jeder Greiferfinger mehrere Glieder aufweist, die um parallele Drehachsen schwenkbar gelagert sind. Alle Greiferfinger können, motorisch angetrieben, unabhängig voneinander bewegt werden.

Die EP 2 660 015 B1 beschreibt einen Greifer zum Manipulieren von insbesondere röhrchenförmigen Probengefäßen mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden.

Die DE 10 2013 226 289 A1 beschreibt eine Röntgenvorrichtung, für einen medizinischen Arbeitsplatz, aufweisend einen insbesondere C bogenförmigen Träger, der einen ersten Trägerhalteabschnitt aufweist, an dem eine Röntgensendeeinrichtung gehalten ist, und der einen dem ersten Trägerhalteabschnitt gegenüberliegenden zweiten Trägerhalteabschnitt aufweist, an dem eine Röntgenempfangseinrichtung gehalten ist, des Weiteren aufweisend eine Verstelleinrichtung, die ausgebildet ist, eine relative Pose von Röntgensendeeinrichtung und/oder Röntgenempfangseinrichtung zu dem C-bogenförmigen Träger durch Verstellen der Pose der Röntgensendeeinrichtung an dem ersten Trägerhalteabschnitt und/oder durch Verstellen der Pose der Röntgenempfangseinrichtung an dem zweiten Trägerhalteabschnitt unabhängig voneinander zu ändern.

Aufgabe der Erfindung ist es, einen Robotergreifer zu schaffen, mit dem eine Vielzahl unterschiedlichster Objekte sicher gegriffen werden können.

Diese Aufgabe wird erfindungsgemäß gelöst durch einen Robotergreifer, aufweisend einen Greifergrundkörper, der einen Anschlussflansch aufweist, der zur Befestigung des Rotationsgreifers an einem Werkzeugflansch eines Roboterarms ausgebildet ist, des Weiteren aufweisend ein Basisglied, welches mittels eines ersten Drehgelenks, das von einem ersten Antriebsmotor automatisch verstellbar ist, um eine erste Drehachse drehbar am Greifergrundkörper gelagert ist, sowie aufweisend einen ersten Greiferfinger, der mittels eines zweiten Drehgelenks, das von einem zweiten Antriebsmotor automatisch verstellbar ist, um eine zweite Drehachse, die parallel zur ersten Drehachse ausgerichtet ist, bezüglich des Basisglieds drehbar gelagert ist und aufweisend wenigstens einen weiteren Greiferfinger, wobei das zweite Drehgelenk zum einzelnen Verstellen des ersten Greiferfingers durch den zweiten Antriebsmotor unabhängig von dem wenigstens einen weiteren Greiferfinger ausgebildet ist, und wobei das Basisglied eine rotationssymmetrische Außenmantelwand aufweist, an der das Basisglied vollständig innerhalb der Außenkontur des Greifergrundkörpers drehbar gelagert ist, ein Zwischenglied des Robotergreifers eine rotationssymmetrische Außenmantelwand aufweist, an der das Zwischenglied vollständig innerhalb der Außenkontur des Basisglieds drehbar gelagert ist, und ein Fingerträger des Robotergreifers eine rotationssymmetrische Außenmantelwand aufweist, an der der Fingerträger vollständig innerhalb der Außenkontur des Zwischenglieds drehbar gelagert ist.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk ist. Der Roboter kann aber auch ein sogenannter Leichtbauroboter sein, welcher insbesondere sieben seriell aufeinander folgende Drehachsen aufweisen kann.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft- und/oder momentgeregelt statt lediglich positionsgeregelt betrieben werden, was beispielsweise eine Mensch-Roboter-Kooperation sicherer macht. Außerdem kann dadurch eine solche sichere Mensch-Maschine-Kooperation erreicht werden, dass beispielsweise unbeabsichtigte Kollisionen des Roboterarmes mit Personen, wie beispielsweise Werkern und Monteure entweder verhindert oder zumindest derart abgeschwächt werden können, so dass den Personen bzw. Monteuren kein Schaden entsteht.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte sensorlos, beispielsweise anhand der gemessenen Motorströme der Antriebsmotoren an den Gelenken des SCARA-Roboters abgeschätzt werden.

Indem der Robotergreifer einen Greifergrundkörper aufweist, der mit einem Anschlussflansch versehen ist, der zur Befestigung des Rotationsgreifers an einem Werkzeugflansch eines Roboterarms ausgebildet ist, und des Weiteren ein Basisglied aufweist, welches mittels eines ersten Drehgelenks, das von einem ersten Antriebsmotor automatisch verstellbar ist, um eine erste Drehachse drehbar am Greifergrundkörper gelagert ist, sowie einen ersten Greiferfinger aufweist, der mittels eines zweiten Drehgelenks, das von einem zweiten Antriebsmotor automatisch verstellbar ist, um eine zweite Drehachse, die parallel zur ersten Drehachse ausgerichtet ist, bezüglich des Basisglieds drehbar gelagert ist und wenigstens ein weiterer Greiferfinger vorgesehen ist, und dabei das zweite Gelenk zum einzelnen Verstellen des ersten Greiferfingers durch den zweiten Antriebsmotor unabhängig von dem wenigstens einen weiteren Greiferfinger ausgebildet ist, können eine Vielzahl unterschiedlichster Objekte sicher gegriffen werden, da zumindest der eine Greiferfinger, d.h. der erste Greiferfinger eine von der jeweiligen Stellung der anderen Greiferfinger unabhängige eigene Stellung einnehmen kann. So können die Greiferfinger in vielfältiger gegenseitiger Anordnung positioniert werden. Die Greiferfinger sind dabei nicht gekoppelt und sie sind nicht auf eine bloße Öffnungsbewegung voneinander weg und eine bloße Schließbewegung aufeinander zu beschränkt.

Der erste Greiferfinger und der wenigstens eine weitere Greiferfinger werden vorzugsweise von starren Stäben gebildet. Indem der Greiferfinger bzw. die Greiferfinger als starre Stäbe ausgebildet sind, können aufwändige Gelenke an den Greiferfingern entfallen und demgemäß kostengünstige und auch robuste Greiferfinger geschaffen werden, die zudem nur wenig anfällig für Störungen sind. Diese starren Stäbe können jedoch vielfältige Querschnittsformen aufweisen. Jeder der Greiferfinger kann auch mittels einer den jeweiligen Greiferfinger mit dem Robotergreifer bzw. dessen Greifergrundkörper, Zwischenglied oder Fingerträger verbindenden Kupplungsvorrichtung austauschbar am Robotergreifer befestigt sein. So können die Stäbe eine allgemeine zylindrische Außenmantelwand aufweisen und die Stäbe in einem senkrecht zu ihrer Längserstreckung verlaufenden Querschnitt beispielsweise eine kreisförmige, quadratische, rechteckige, dreieckige oder sonstige geometrische Form aufweisen. Insbesondere kann die zylindrische Außenmantelwand dieser Stäbe ein gerader Zylinder sein. Alle am Robotergreifer vorhandenen Greiferfinger können dieselbe Querschnittsform aufweisen. Alternativ kann wenigstens ein Greiferfinger eine andere Querschnittsform aufweisen, als der wenigstens eine weitere Greiferfinger. Alle am Robotergreifer vorhandenen Greiferfinger können aber auch individuelle, d.h. voneinander abweichende Querschnittsformen aufweisen.

In einer ersten grundlegenden Variante des Robotergreifers kann der erste Greiferfinger durch das erste Drehgelenk und das zweite Drehgelenk einzeln bezüglich des Greifergrundkörpers verstellbar gelagert sein und lediglich ein zweiter Greiferfinger vorhanden sein, der an dem Greifergrundkörper befestigt ist. In einer anderen Variante kann der erste Greiferfinger durch das erste Drehgelenk und das zweite Drehgelenk einzeln bezüglich des Greifergrundkörpers verstellbar gelagert sein und neben dem ersten Greiferfinger zwei weitere Greiferfinger vorhanden sein, die beide in einem Abstand voneinander an dem Greifergrundkörpers starr befestigt sein. Ein solcher Robotergreifer weist demgemäß also insgesamt drei Greiferfinger auf, wobei der eine Greiferfinger relativ zu den beiden anderen am Greifergrundkörper starr befestigten Greiferfingern durch das erste Drehgelenk und das zweite Drehgelenk verstellbar ist. In einer weiteren Variante kann neben dem ersten Greiferfinger, der durch das erste Drehgelenk und das zweite Drehgelenk verstellbar ist, auch ein zweiter und/oder dritter Greiferfinger über ein eigenes Drehgelenk oder zwei eigene Drehgelenke bezüglich des Greifergrundkörpers und relativ zu den anderen Greiferfingern unabhängig verstellbar sein.

Vorzugsweise sind der erste Antriebsmotor und der zweite Antriebsmotor und ggf. jeder weitere Antriebsmotor am Robotergreifer vorgesehen.

Der Greifergrundkörper kann eine im Wesentlichen rotationssymmetrische Grundform aufweisen. Die rotationssymmetrische Grundform kann in allen Ausführungsvarianten beispielsweise die Form eines im Wesentlichen geraden Kreiszylinders sein. Der Greifergrundkörper kann beispielsweise im Wesentlichen kreisscheibenförmig gestaltet sein. Die rotationssymmetrische Grundform kann aber beispielsweise auch kegelstumpfförmig oder tonnenförmig sein. An einer kreisförmigen ersten Stirnseite des Greifergrundkörpers kann der Anschlussflansch angeordnet sein. An einer der ersten kreisförmigen Stirnseite gegenüberliegenden, kreisförmigen Stirnseite kann sich der erste Greiferfinger senkrecht aus der Ebene der zweiten Stirnseite heraus erstrecken. Auch der wenigstens eine weitere Greiferfinger, d.h. beispielsweise ein zweiter, dritter oder sogar vierter Greiferfinger kann sich senkrecht aus der Ebene der zweiten Stirnseite heraus erstrecken. Alle Greiferfinger des Robotergreifers können sich demgemäß in einer parallelen Anordnung zueinander ausgerichtet von der zweiten Stirnseite weg erstrecken. Die Längserstreckungen der Greiferfinger können sich insbesondere parallel zur Symmetrieachse des Anschlussflansches, d.h. auch parallel zu einer Drehachse eines Werkzeugflansches eines Roboterarms, an dem der Robotergreifer anschließbar ist, erstrecken.

In einer speziellen Ausführungsform der Erfindung kann der Robotergreifer einen den ersten Greiferfinger aufweisenden Fingerträger aufweisen, der mittels eines dritten Drehgelenks, das von einem dritten Antriebsmotor automatisch verstellbar ist, um eine dritte Drehachse, die parallel sowohl zur ersten Drehachse als auch zur zweiten Drehachse ausgerichtet ist, an einem Zwischenglied des Robotergreifers drehbar gelagert sein, welches Zwischenglied seinerseits mittels des zweiten Drehgelenks um die zweite Drehachse drehbar an dem Basisglied gelagert ist.

In einer solchen Ausführungsform bilden die Glieder des Robotergreifers, welche Glieder durch den Greifergrundkörper, das Basisglied, das Zwischenglied und dem Fingerträger gebildet werden, eine kinematische Kette von Gliedern, die durch das erste Drehgelenk, das zweite Drehgelenk und das dritte Drehgelenk drehbar verstellt werden können. Insoweit kann zumindest der erste Greiferfinger in insgesamt drei Freiheitsgraden bezüglich des Greifergrundkörpers drehverstellt werden. Die drei Drehachsen des ersten Drehgelenks, des zweiten Drehgelenks und des dritten Drehgelenks sind dabei parallel zueinander ausgerichtet. Im Ergebnis kann dadurch der auf dem Fingerträger montierte erste Greiferfinger in der Ebene der zweiten Stirnseite des Greifergrundkörpers nicht nur jede beliebige Position einnehmen und dabei jede beliebige Orientierung aufweisen, sondern jede Position auch auf beliebigen Bewegungsbahnen erreichen. So kann wenigstens der erste Greiferfinger relativ zu dem wenigstens einen weiteren Greiferfinger eine universelle Bewegungsfreiheit in der Ebene aufweisen, d.h. jegliche Art von Greiferbewegung erzeugen. So können beispielsweise zwei gegenüberliegende Greiferfinger eine lineare Bewegung aufeinander zu und voneinander weg ausführen, aber auch eine zangenartige oder scherenartige Bewegung gegeneinander ausführen, d.h. ein Greiferfinger auf einer Kreisbahn auf den anderen Greiferfinger zu bewegt bzw. von diesem weg bewegt werden. Der eine Greiferfinger kann aber auch auf einer beliebigen sonstigen Bahn auf den anderen Greiferfinger zu bewegt bzw. von diesem weg bewegt werden.

Erfindungsgemäß weist das Basisglied eine rotationssymmetrische Außenmantelwand auf, an der das Basisglied vollständig innerhalb der Außenkontur des Greifergrundkörpers drehbar gelagert ist, ein Zwischenglied des Robotergreifers eine rotationssymmetrische Außenmantelwand aufweisen, an der das Zwischenglied vollständig innerhalb der Außenkontur des Basisglieds drehbar gelagert ist, und/oder ein Fingerträger des Robotergreifers weist eine rotationssymmetrische Außenmantelwand auf, an der der Fingerträger vollständig innerhalb der Außenkontur des Zwischenglieds drehbar gelagert ist. Dies kann insbesondere bedeuten, dass nur die Lagerung jeweils innen liegt. Es kann jedoch auch sein, dass sich Segmente des Antriebsstrangs über mehrere Glieder erstrecken.

Dies bedeutet, dass das Basisglied eine rotationssymmetrische Außenmantelwand aufweisen kann, an der das Basisglied vollständig innerhalb der Außenkontur des Greifergrundkörpers drehbar gelagert ist. Alternativ oder ergänzend dazu kann ein Zwischenglied des Robotergreifers eine rotationssymmetrische Außenmantelwand aufweisen, an der das Zwischenglied vollständig innerhalb der Außenkontur des Basisglieds drehbar gelagert ist. Des Weiteren alternativ oder ergänzend dazu kann ein Fingerträger des Robotergreifers eine rotationssymmetrische Außenmantelwand aufweisen, an der der Fingerträger vollständig innerhalb der Außenkontur des Zwischenglieds drehbar gelagert ist.

Das Zwischenglied kann einen Durchmesser aufweisen, welcher zumindest im Wesentlichen dem Radius des Greifergrundkörpers entspricht. Die Drehachse des Zwischenglieds, d.h. die zweite Drehachse kann sich dabei zumindest in etwa oder genau auf halber Länge des Radius des Greifergrundkörpers befinden. Der Fingerträger kann einen möglichst kleinen Durchmesser aufweisen und demgemäß kann die Drehachse des Fingerträgers, d.h. die dritte Drehachse möglichst weit in Nähe des Außenumfangs des Zwischenglieds gezogen, angeordnet sein. Der erste Greiferfinger kann an dem Fingerträger in einer solchen Anordnung befestigt sein, dass die zentrale, sich in Längserstreckung des ersten Greiferfingers erstreckende geometrische Achse des ersten Greiferfingers entlang der dritten Drehachse ausgerichtet ist. Durch Verstellen des dritten Drehgelenks kann demgemäß der erste Greiferfinger um seine geometrische Achse rotiert werden, ohne dass sich die Position des ersten Greiferfingers bezüglich des Greifergrundkörpers und des Zwischenglieds verändert. Die kinematischen Verhältnisse ergeben sich aus den Abständen der Drehachsen zueinander. Entscheidend sind die absoluten Längen zwischen der ersten und zweiten Drehachse und zwischen der zweiten und dritten Drehachse und dem Verhältnis zueinander.

Das Basisglied kann eine in Richtung der ersten Drehachse weisende Bauhöhe aufweisen, die höchstens so groß ist, wie die in Richtung der ersten Drehachse weisenden Bauhöhe des Greifergrundkörpers, ein Zwischenglied des Robotergreifers kann eine in Richtung der zweiten Drehachse weisende Bauhöhe aufweisen, die höchstens so groß ist, wie die in Richtung der ersten Drehachse weisenden Bauhöhe des Basisglieds, und ein Fingerträger des Robotergreifers kann eine in Richtung der dritten Drehachse weisende Bauhöhe aufweisen, die höchstens so groß, wie die in Richtung der zweiten Drehachse weisenden Bauhöhe des Zwischenglieds. Dadurch ergibt sich eine geringe Gesamtbauhöhe des Robotergreifers.

Dies bedeutet, dass das Basisglied eine in Richtung der ersten Drehachse weisende Bauhöhe aufweisen kann, die höchstens so groß ist, wie die in Richtung der ersten Drehachse weisenden Bauhöhe des Greifergrundkörpers. Alternativ oder ergänzend dazu kann ein Zwischenglied des Robotergreifers eine in Richtung der zweiten Drehachse weisende Bauhöhe aufweisen, die höchstens so groß ist, wie die in Richtung der ersten Drehachse weisenden Bauhöhe des Basisglieds. Des Weiteren alternativ oder ergänzend dazu kann ein Fingerträger des Robotergreifers eine in Richtung der dritten Drehachse weisende Bauhöhe aufweisen, die höchstens so groß, wie die in Richtung der zweiten Drehachse weisenden Bauhöhe des Zwischenglieds.

In einer weiteren speziellen Ausführungsvariante kann der Robotergreifer derart gestaltet, dass
- das erste Drehgelenk ein das Basisglied umgebendes erstes Lager aufweist, insbesondere erstes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Basisglieds befestigt ist oder die Innenringlaufbahn an der rotationssymmetrischen Außenmantelwand des Basisglieds ausgebildet ist,
- das zweite Drehgelenk ein das Zwischenglied umgebendes zweites Lager aufweist, insbesondere zweites Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Zwischenglieds befestigt ist oder die Innenringlaufbahn an der rotationssymmetrischen Außenmantelwand des Zwischenglieds ausgebildet ist, und
- das dritte Drehgelenk ein den Fingerträger umgebendes drittes Lager aufweist, insbesondere drittes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Fingerträgers befestigt ist oder die Innenringlaufbahn an der rotationssymmetrischen Außenmantelwand des Fingerträgers ausgebildet ist.

Durch eine solche Lagergestaltung, insbesondere Wälzlagergestaltung oder Gleitlagergestaltung kann eine besonders steife Anordnung von erstem Drehgelenk, zweitem Drehgelenk und drittem Drehgelenk erreicht werden. Demgemäß ist das zweite Wälzlager insoweit vollständig von dem ersten Wälzlager umgeben und das dritte Wälzlager vollständig vom zweiten Wälzlager und in Folge auch vollständig vom ersten Wälzlager umgeben. In einer abgewandelten Ausführungsvariante des Robotergreifers können ein oder mehrere der Wälzlager, insbesondere alle Wälzlager durch Gleitlager ersetzt sein.

Der erste Antriebsmotor kann insbesondere innerhalb des Greifergrundkörpers oder des Basisglieds angeordnet sein, der zweite Antriebsmotor kann insbesondere innerhalb des Basisglieds, des Zwischenglieds oder des Greifergrundkörpers angeordnet sein, und/oder der dritte Antriebsmotor kann insbesondere innerhalb des Zwischenglieds, des Fingerträgers, des Basisglieds oder des Greifergrundkörpers angeordnet sein.

Der erste Antriebsmotor, der zweite Antriebsmotor und der dritte Antriebsmotor können demgemäß also alle innerhalb des Robotergreifers angeordnet sein. Um das erste Drehgelenk mittels des ersten Antriebsmotors verstellen zu können, kann der erste Antriebsmotor wahlweise antriebsseitig oder abtriebsseitig des ersten Drehgelenks befestigt sein, d.h. antriebsseitig am Greifergrundkörper oder abtriebsseitig am Basisglied befestigt sein, wobei eine erste Motorwelle des ersten Antriebsmotors an das jeweils andere Glied von Greifergrundkörper oder Basisglied angekoppelt ist. Um das zweite Drehgelenk mittels des zweiten Antriebsmotors verstellen zu können, kann der zweite Antriebsmotor wahlweise antriebsseitig oder abtriebsseitig des zweiten Drehgelenks befestigt oder antriebsseitig ausgelagert sein, d.h. antriebsseitig am Greifergrundkörper, am Basisglied oder abtriebsseitig am Zwischenglied befestigt sein, wobei eine zweite Motorwelle des zweiten Antriebsmotors an das jeweils andere Glied von Basisglied oder Zwischenglied angekoppelt ist.

Weiterhin kann der Antriebsmotor der zweiten Welle in den Greifergrundkörper ausgelagert sein, wobei dann die erste Drehachse des Greifers vom Antriebsstrang für das zweite Gelenk zu überbrücken ist, dies kann mit oder ohne Kopplung zur ersten Drehachse erfolgen.

Um das dritte Drehgelenk mittels des dritten Antriebsmotors verstellen zu können, kann der dritte Antriebsmotor wahlweise antriebsseitig oder abtriebsseitig des dritten Drehgelenks befestigt, oder antriebsseitig ausgelagert sein d.h. antriebsseitig am Zwischenglied, am Basisglied oder am Greifergrundkörper oder abtriebsseitig am Fingerträger befestigt sein, wobei eine dritte Motorwelle des dritten Antriebsmotors an das jeweils andere Glied von Zwischenglied oder Fingerträger angekoppelt ist.

Weiterhin kann der Antriebsmotor der dritten Welle in das Zwischenglied, in das Basisglied oder in den Greifergrundkörper ausgelagert sein, wobei dann die zweite Drehachse alleine, oder die zweite Drehachse und die erste Drehachse des Greifers vom Antriebsstrang für das dritte Gelenk zu überbrücken ist. Dies kann mit oder ohne Kopplung zur zweiten oder ersten Drehachse erfolgen.

Versorgungsleitungen, wie beispielsweise elektrische Leitungen, insbesondere zur Versorgung von elektrischen Antrieben oder Sensoren der Drehgelenke des Robotergreifers mit elektrischer Energie, können über ein oder mehrere der Drehgelenke hinweggeführt sein. In einer ersten Ausführungsvariante kann die wenigstens eine Versorgungsleitung das betreffende Drehgelenk überbrückend von dem jeweils einen Glied des Robotergreifers zu dem nächsten Glied des Robotergreifers führend, zumindest im Wesentlichen parallel zur betreffenden Drehachse verlegt sein. In einer solchen Ausführungsvariante kann das jeweilige Drehgelenk auf einen Drehwinkel von beispielsweise maximal 400 Grad, insbesondere maximal 360 Grad oder weniger begrenzt sein. In einer anderen Ausführungsvariante, in der das Drehgelenk insbesondere mehr als 360 Grad drehen kann, insbesondere mehrere Umdrehungen drehen kann, können Schleifkontakte vorgesehen sein, über welche die elektrische Energie über das Drehgelenk hinweg geführt werden kann.

Der erste Antriebsmotor kann zum kraft- und/oder momentgeregelten Ansteuern ausgebildet sein, der zweite Antriebsmotor kann zum kraft- und/oder momentgeregelten Ansteuern ausgebildet sein, und/oder der dritte Antriebsmotor kann zum kraft- und/oder momentgeregelten Ansteuern ausgebildet sein. Dies bedeutet, dass der erste Antriebsmotor zum kraft- und/oder momentgeregelten Ansteuern ausgebildet sein kann. Alternativ oder ergänzend dazu kann der zweite Antriebsmotor zum kraft- und/oder momentgeregelten Ansteuern ausgebildet sein. Des Weiteren alternativ oder ergänzend dazu kann der dritte Antriebsmotor zum kraft- und/oder momentgeregelten Ansteuern ausgebildet sein.

Bei einem kraft- und/oder momentgeregelten Ansteuern der Antriebsmotoren des Robotergreifers können die Drehgelenke des Robotergreifers hinsichtlich ihrer Steifigkeit parametriert sein. In allen Ausführungen kann dazu das kraft- und/oder momentgeregelten Ansteuern der Antriebsmotoren des Robotergreifers mittels Impedanzregelung oder Admittanzregelung erfolgen. Eine Greifersteuerung oder eine Robotersteuerung kann eingerichtet sein, eine für die sichere Mensch-Roboter-Kooperation geeignete Nachgiebigkeit der Greiferfinger am Robotergreifer insbesondere mittels Impedanzregelung oder Admittanzregelung zu erzeugen. In einer derartigen Nachgiebigkeitsregelung kann ein Handfahrbetrieb auch bedeuten, dass die Greiferfinger am Robotergreifer auch von einem Werker handgeführt bewegt werden können, d.h. die Greiferfinger des Robotergreifers auch manuelle verstellt werden können.

Der erste Greiferfinger bzw. der zweite Greiferfinger und/oder der dritte Greiferfingers kann in einem senkrecht zu seiner Längserstreckung liegenden Querschnitt eine von der Kreisform abweichende Querschnittskontur aufweisen.

Der erste Greiferfinger bzw. der zweite Greiferfinger und/oder der dritte Greiferfinger kann demgemäß in einem senkrecht zu seiner Längserstreckung verlaufenden Querschnitt statt einer Kreisform beispielsweise eine quadratische, eine rechteckige, eine dreieckige, oder sonstige geometrische Form aufweisen. Insbesondere kann eine zylindrische Außenmantelwand des ersten Greiferfinger bzw. des zweiten Greiferfingers und/oder des dritten Greiferfingers ein gerader Zylinder sein.

Jeder weitere Greiferfinger, insbesondere der zweite Greiferfinger und/oder der dritte Greiferfinger kann um eine parallel zu seiner Längsachse ausgerichteten Drehachse an dem Greifergrundkörper automatisiert verdrehbar gelagert sein. Insbesondere können der zweite Greiferfinger und/oder der dritte Greiferfinger um die erste Drehachse des Basisglieds an dem Greifergrundkörper automatisiert verdrehbar gelagert sein.

Im Übrigen können alle am Robotergreifer vorhandenen Greiferfinger dieselbe Querschnittsform aufweisen. Alternativ kann wenigstens ein Greiferfinger eine andere Querschnittsform aufweisen, als der wenigstens eine weitere Greiferfinger. Alle am Robotergreifer vorhandenen Greiferfinger können aber auch individuelle, d.h. voneinander abweichende Querschnittsformen aufweisen.

Der weitere Greiferfinger kann ein zweiter Greiferfinger oder ein dritter Greiferfinger sein, der starr an dem Greifergrundkörper befestigt ist.

Der zweite Greiferfinger kann dazu am Greifergrundkörper derart angeordnet befestigt sein, dass die Außenkontur des zweiten Greiferfingers vollständig innerhalb einer vom Außenumfang des Greifergrundkörpers bestimmten Hüllzylinderfläche liegt. Auch der dritte Greiferfinger kann am Greifergrundkörper derart angeordnet befestigt sein, dass die Außenkontur des dritten Greiferfingers vollständig innerhalb der vom Außenumfang des Greifergrundkörpers bestimmten Hüllzylinderfläche liegt. Dadurch kann eine gesamte Außenkontur des Robotergreifers geschaffen werden, die keine abstehenden Vorsprünge aufweist, die ein Verletzungsrisiko darstellen könnten für eine Person, die einen den Robotergreifer aufweisenden Roboterarm handhabt oder führt.

Wenn der zweite Greiferfinger bzw. der dritte Greiferfinger am Greifergrundkörper derart angeordnet befestigt ist, dass die Außenkontur des zweiten Greiferfingers bzw. des dritten Greiferfingers vollständig innerhalb einer vom Außenumfang des Greifergrundkörpers bestimmten Hüllzylinderfläche liegt, dann kann der zweite Greiferfinger und/oder der dritte Greiferfinger auf einer Tragplatte befestigt sein, welche über die äußere Kreiskontur des Basisglieds nach innen in Richtung der ersten Drehachse des Robotergreifers vorspringt. Die Tragplatte kann von einer Kreissegmentscheibe gebildet werden, die mit ihrer kreisbogenförmigen Konturkante an einem Randbereich des Greifergrundkörpers befestigt ist und über einen kreissegmentförmigen Bereich des Basisglieds hinweg nach innen in Richtung der ersten Drehachse des Robotergreifers vorspringt. Dies bedeutet, dass das Basisglied unter der Tragplatte hindurch drehen kann, wodurch der an dem Basisglied gelagerte erste Greiferfinger unmittelbar bis an den zweiten Greiferfinger bzw. den dritten Greiferfinger herangedreht werden kann. Der erste Greiferfinger kann demgemäß bis zu einer Kollision an den zweiten Greiferfinger bzw. den dritten Greiferfinger herangedreht werden, so dass der erste Greiferfinger mit dem zweiten Greiferfinger bzw. mit dem dritten Greiferfinger bis in eine Schließstellung aufeinander zu gedreht werden können, so dass sogar sehr dünne Bauteile, wie beispielsweise dünne Bleche oder einzelne Papierblätter gegriffen werden können.

In einer Abwandlung einer kreissegmentscheibenförmigen Tragplatte kann eine gerade Kante der Kreissehne durch eine eingebuchtete Kante ersetzt sein. Eine solche eingebuchtete Kante kann in einem zwischen dem zweiten Greiferfinger und dem vom zweiten Greiferfinger beabstandet angeordneten dritten Greiferfinger liegenden Bereich der Kreissehne an der Tragplatte ausgebildet sein. Eine solche Einbuchtung ermöglicht es, den ersten Greiferfinger sogar zwischen den zweiten Greiferfinger und den dritten Greiferfinger fahren zu können, so dass der erste Greiferfinger zumindest teilweise oder sogar vollständig zwischen den zweiten Greiferfinger und den dritten Greiferfinger positioniert werden kann.

Der erste Greiferfinger kann unangetrieben an dem Fingerträger oder dem Zwischenglied um eine passive Drehachse drehbar gelagert sein. Alternativ kann der erste Greiferfinger auch starr an dem Fingerträger oder dem Zwischenglied befestigt sein. In einer solchen Ausführungsvariante kann der Greiferfinger insbesondere eine kreisförmige Querschnittskontur aufweisen. Ist der erste Greiferfinger am Zwischenglied um eine passive Drehachse drehbar gelagert oder starr gelagert, dann kann insoweit der dritte Antriebsmotor entfallen. Vorzugsweise ist im Falle einer unangetriebenen drehbaren Lagerung des ersten Greiferfingers, ob am Fingerträger oder am Zwischenglied gelagert oder starr befestigt, der erste Greiferfinger mit einer im Querschnitt kreisförmigen Kontur ausgebildet. Gleichwohl kann auch der unangetrieben drehbar gelagerte erste Greiferfinger aber auch jede andere Querschnittskontur aufweisen.

Der erste Greiferfinger kann aufgrund einer Kopplung durch Elemente aus dem Bereich des Antriebsstangs mit dem Greifergrundkörper die Ausrichtung seiner Greiffläche parallel zur Greiffläche des zweiten oder dritten Finger unabhängig von seiner Position beibehalten. Der erste Finger kann dann nicht um die dritte Achse gedreht werden und es ist auch kein dritter Antriebsmotor enthalten.

Der erste Greiferfinger bzw. der zweite Greiferfinger und/oder der dritte Greiferfinger kann mittels eines Hebels, der den jeweiligen, d.h. den ersten Greiferfinger bzw. den zweiten Greiferfinger und/oder den dritten Greiferfinger mit seiner Längserstreckung zumindest im Wesentlichen oder genau parallel zur dritten Drehachse des dritten Drehgelenks, welches den Fingerträger trägt, ausgerichtet sein und in einem Abstand von der dritten Drehachse angeordnet, an dem Fingerträger befestigt sein.

Der erste Greiferfinger bzw. der zweite Greiferfinger und/oder der dritte Greiferfinger kann dadurch an dem Fingerträger in einer solchen Anordnung befestigt sein, dass die zentrale, sich in Längserstreckung des ersten Greiferfingers bzw. des zweiten Greiferfingers, bzw. des dritten Greiferfingers erstreckende geometrische Achse des ersten Greiferfingers bzw. des zweiten Greiferfingers, bzw. des dritten Greiferfingers zur dritten Drehachse bzw. zur Achse die zur ersten Drehachse parallel ist und durch den Aufnahmepunkt des zweiten bzw. dritten Greiferfingers geht, versetzt angeordnet ist. Durch Verstellen des dritten Drehgelenks kann demgemäß der erste Greiferfinger bzw. der zweite Greiferfinger, bzw. der dritte Greiferfinger dann um eine Drehachse geschwenkt werden, welche in einem Abstand, insbesondere in einem variablen Abstand zu seiner geometrischen Achse angeordnet ist, so dass sich die Position des Greiferfingers bezüglich des Greifergrundkörpers und des Zwischenglieds dadurch verändert.

Der zweite Greiferfinger, oder der zweite Greiferfinger und der dritte Greiferfinger können in ihrer Form so gestaltet sein, dass sie mit ihrer jeweiligen Längserstreckung aus dem Greifergrundkörper seitlich herauskragen. Der erste Greiferfinger kann dazu eine Form aufweisen, die es ihm gestattet beispielsweise sehr kleine Gegenstände auch außerhalb der Außenkontur des Greifergrundkörpers greifen zu können. Dabei können der zweite Greiferfinger und/oder der erste Greiferfinger beispielsweise sehr nahe an eine Begrenzungswand herangefahren werden, wobei der Greifergrundkörper sich dabei in einem größeren Abstand zur Begrenzungswand befinden kann. Eine solche Fingergeometrie erlaubt also ein Greifen an einer Kante z.B. innerhalb eines Kleinladungsträgers.

In einer anderen Konfiguration der Greiferfinger, d.h. in alternativen Gelenkstellungen für den ersten Greiferfinger bzw. den zweiten Greiferfinger und/oder den dritten Greiferfinger kann beispielsweise der erste Greiferfinger an einer diametral dem zweiten Greiferfinger und dem dritten Greiferfinger gegenüberliegenden Seite aus dem Greifergrundkörper seitlich herauskragen. Dadurch kann sich eine Zangenöffnungsweite zwischen dem ersten Greiferfinger und dem zweiten Greiferfinger bzw. dem dritten Greiferfinger ergeben, die deutlich größer sein kann, als die Breite des Greifergrundkörpers. Dies erlaubt das Greifen von Gegenständen, die in ihrer Breite deutlich größer sind als der Greifergrundkörper selbst.

Der erste Greiferfinger kann demgemäß beispielsweise von einem L-förmigen Glied gebildet werden, wobei ein mit dem Fingerträger verbundener erster Schenkel des L-förmigen Glieds den Hebel bildet und der andere Schenke, d.h. ein zweiter Schenkel des L-förmigen Glieds einen Greifabschnitt des ersten Greiferfingers bildet, der in seiner Längserstreckung parallel zu den Drehachsen der Drehgelenke des Robotergreifers ausgerichtet ist. Alternativ oder ergänzend kann auch der zweite Greiferfinger und/oder der dritte Greiferfinger in gleicher Weise beispielsweise von einem L-förmigen Glied gebildet werden.

Der erste Greiferfinger bzw. der zweite Greiferfinger und/oder der dritte Greiferfinger kann wenigstens einen Außenmantelwandabschnitt aufweisen, der bezüglich einer im Wesentlichen parallel zur Längserstreckung des ersten Greiferfingers bzw. des zweiten Greiferfingers und/oder des dritten Greiferfingers sich erstreckenden Zentrumsachse des ersten Greiferfingers bzw. des zweiten Greiferfingers und/oder des dritten Greiferfingers in seinem Abstand von dieser Zentrumsachse verstellbar ausgebildet ist. Dies bedeutet, dass wenigstens ein Außenmantelwandabschnitt des ersten Greiferfingers bzw. des zweiten Greiferfingers und/oder des dritten Greiferfingers nachgiebig ausgebildet ist. In Abhängigkeit der Querschnittskontur bspw. des ersten Greiferfingers kann der erste Greiferfinger eine einzelne Außenwand oder mehrere Außenwände aufweisen. Im Falle von mehreren Außenwänden kann lediglich eine einzelne Außenwand der mehreren Außenwände nachgiebig ausgeführt sein, oder es können mehrere bzw. alle Außenwände des ersten Greiferfingers nachgiebig ausgeführt sein. In einer speziellen Ausgestaltung kann die jeweilige Außenwand vollständig, insbesondere einteilig verstellbar ausgebildet sein. Alternativ kann die jeweilige Außenwand mehrere Außenwandabschnitte aufweisen, von denen nur eine, mehrere oder sogar alle Außenwandabschnitte einzeln verstellbar ausgebildet sein können. Eine verstellbare Ausbildung der Außenwandabschnitte kann bedeuten, dass der jeweilige Außenwandabschnitt zwar starr ausgebildet ist, aber beweglich gelagert ist. Eine verstellbare Ausbildung der Außenwandabschnitte kann aber auch bedeuten, dass der jeweilige Außenwandabschnitt elastisch ausgebildet ist bzw. mit einer elastischen Haut versehen ist. Die Außenwandabschnitte können also ganz allgemein so ausgebildet sein oder so beweglich gelagert sein, dass sie sich passiv der Oberfläche des Greifobjektes anpassen. Das gleiche gilt auch für den zweiten Greiferfinger und/oder den dritten Greiferfinger.

In einer speziellen Ausführungsform kann der erste Greiferfinger mehrere in seiner Längserstreckung übereinander angeordnete jeweils separat verstellbare oder elastische Außenwandabschnitte aufweisen. Im Falle eines im Querschnitt dreieckigen ersten Greiferfingers können beispielsweise zwei von drei der ebenen Außenwände mehrere, beispielsweise sieben übereinander angeordnete jeweils separat verstellbare Außenwandabschnitte aufweisen. Im Falle eines im Querschnitt rechteckigen oder quadratischen ersten Greiferfingers können beispielsweise zwei oder drei von vier der ebenen Außenwände mehrere, beispielsweise sieben übereinander angeordnete jeweils separat verstellbare Außenwandabschnitte aufweisen. Jeder Außenwandabschnitt kann von einem Federbügel gebildet werden, der an dem ersten Greiferfinger befestigt ist. Alternativ oder ergänzend können die Außenwandabschnitte konkave oder konvexe, insbesondere freie Oberflächengeometrien aufweisen.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters;
- Fig. 2: eine perspektivische Ansicht eines Roboters in Art eines Leichtbauroboters;
- Fig. 3: eine perspektivische Ansicht eines Roboters in Art eines SCARA-Roboters;
- Fig. 4: eine perspektivische Darstellung eines erfindungsgemäßen Robotergreifers, der an einem Werkzeugflansch eines Roboterarms gemäß Fig. 2 befestigt ist;
- Fig. 5a: eine Schnittdarstellung des Robotergreifers gemäß Fig. 4 in Alleinstellung;
- Fig. 5b: eine perspektivische, geschnittene Darstellung einer Ausführungsform des Robotergreifers mit einer beispielhaften Antriebsanordnung;
- Fig. 6: eine Ansicht von unten auf die Greiferfinger des Robotergreifers gemäß Fig. 4 mit seinen drei Drehachsen;
- Fig. 7: eine Ansicht von unten auf die Greiferfinger des Robotergreifers gemäß Fig. 4 mit eingezeichneten, beispielhaften Bewegungsbahnen des ersten Greiferfingers;
- Fig. 8: eine perspektivische Darstellung des Robotergreifers gemäß Fig. 4, der einen beispielhaften Würfel von außen hält;
- Fig. 9: eine perspektivische Darstellung des Robotergreifers gemäß Fig. 4, der einen beispielhaften Rahmen von innen hält;
- Fig. 10: eine Ansicht von unten auf die Greiferfinger des Robotergreifers gemäß Fig. 4 mit einem alternativen ersten Greiferfinger mit dreieckigem Querschnitt, der ein im Querschnitt kreissektorförmiges Bauteil hält;
- Fig. 11: eine Ansicht von unten auf die Greiferfinger des Robotergreifers gemäß Fig. 4, der einen beispielhaften Stift hält;
- Fig. 12a: eine perspektivische Darstellung des Robotergreifers gemäß Fig. 4, der einen beispielhaften dünnen Stift mit einer Stirnseite des ersten Greiferfingers hält;
- Fig. 12b: eine perspektivische Darstellung des Robotergreifers gemäß Fig. 4, der einen beispielhaften dickeren Stift mit einer Breitseite des ersten Greiferfingers hält;
- Fig. 13: eine perspektivische Darstellung des Robotergreifers gemäß Fig. 4 mit einem unangetriebenen ersten Greiferfinger;
- Fig. 14a: eine perspektivische Darstellung des Robotergreifers gemäß Fig. 4 mit einem L-förmigen ersten Greiferfinger in einer weiten Stellung;
- Fig. 14b: eine perspektivische Darstellung des Robotergreifers gemäß Fig. 4 mit einem L-förmigen ersten Greiferfinger in einer engen Stellung;
- Fig. 15a: eine schematische Schnittdarstellung des Robotergreifers mit seitlich über den Greifergrundkörper herausragenden Greiferfingern in einer ersten Konfiguration zum Greifen sehr kleine Gegenstände, insbesondere in der Nähe einer Begrenzungswand;
- Fig. 15b: eine schematische Schnittdarstellung des Robotergreifers mit seitlich diametral gegenüberliegend über den Greifergrundkörper herausragenden Greiferfingern in einer zweiten Konfiguration zum Greifen von Gegenständen, die größer sind, als der Greifergrundkörper selbst; und
- Fig. 16: eine perspektivische Darstellung des Robotergreifers gemäß Fig. 4 mit verstellbaren Außenmantelwandabschnitten.

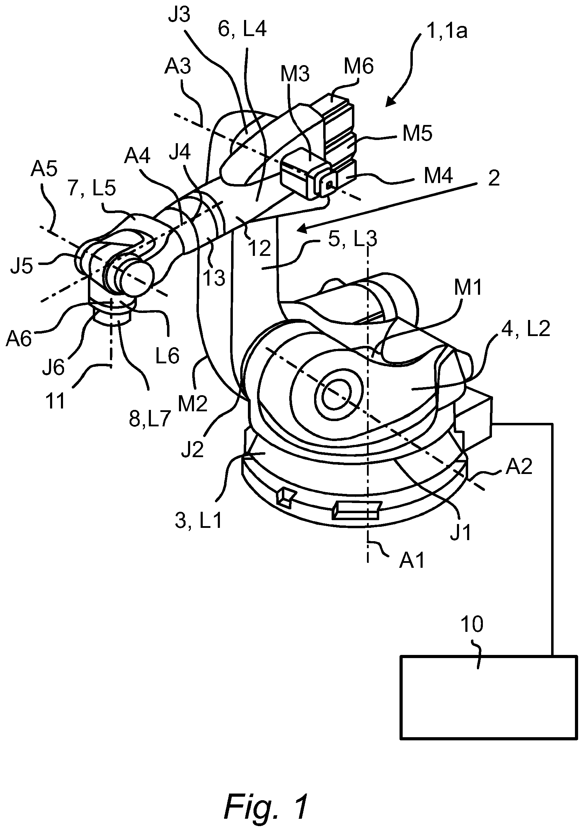

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Robotergreifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein.

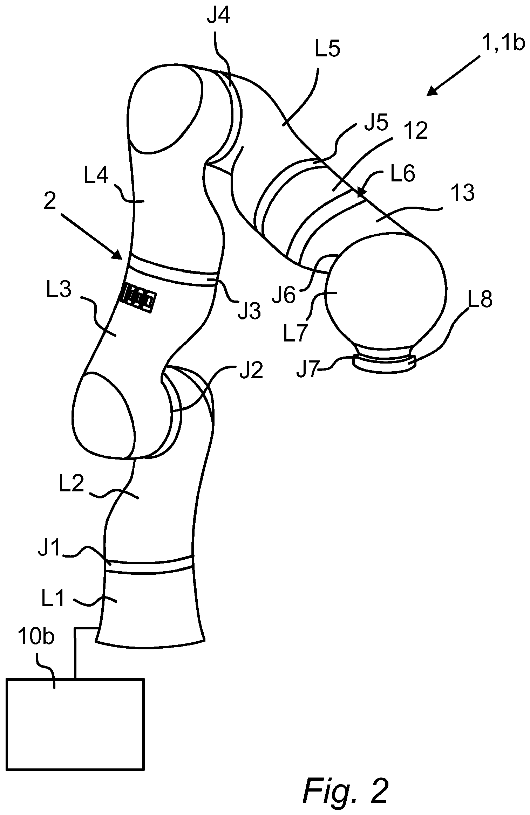

Die Fig. 2 zeigt einen Roboter 1 in einer beispielhaften Ausführung als ein so genannter Leichtbauroboter 1b, der einen Roboterarm 2 und eine Robotersteuerung 10b aufweist. Der Roboterarm 2 umfasst im Falle des vorliegenden Ausführungsbeispiels acht, nacheinander angeordnete und mittels Gelenke J1-J7 drehbar miteinander verbundene Glieder L1-L8. Im Falle des in Fig. 2 gezeigten Ausführungsbeispiels ist das Glied L8 als ein Werkzeugflansch ausgebildet, zum Befestigen eines erfindungsgemäßen Robotergreifers 11.

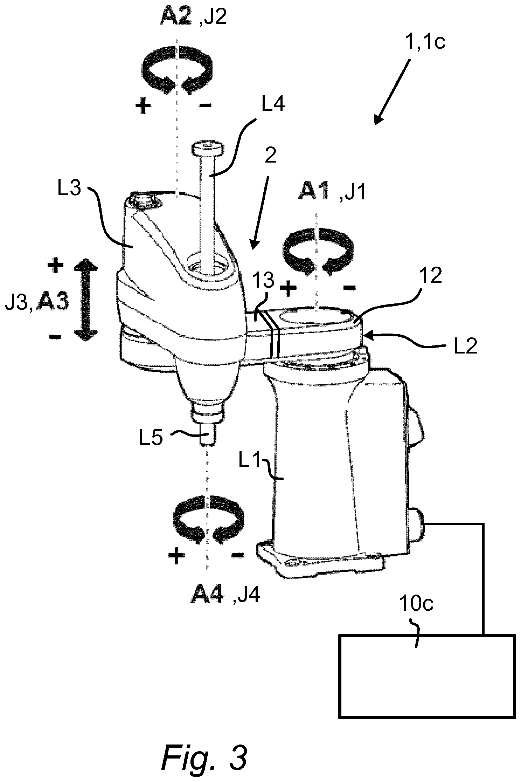

Die Fig. 3 zeigt einen Roboter 1 in einer beispielhaften Ausführung als ein so genannter SCARA-Roboter 1c, der einen Roboterarm 2 und eine Robotersteuerung 10c aufweist. Der Roboterarm 2 umfasst im Falle des vorliegenden Ausführungsbeispiels fünf, nacheinander angeordnete und mittels Gelenke J1-J4 drehbar miteinander verbundene Glieder L1-L5. Im Falle des in Fig. 3 gezeigten Ausführungsbeispiels ist das Glied L5 als ein Werkzeugflansch ausgebildet, zum Befestigen eines erfindungsgemäßen Robotergreifers 11.

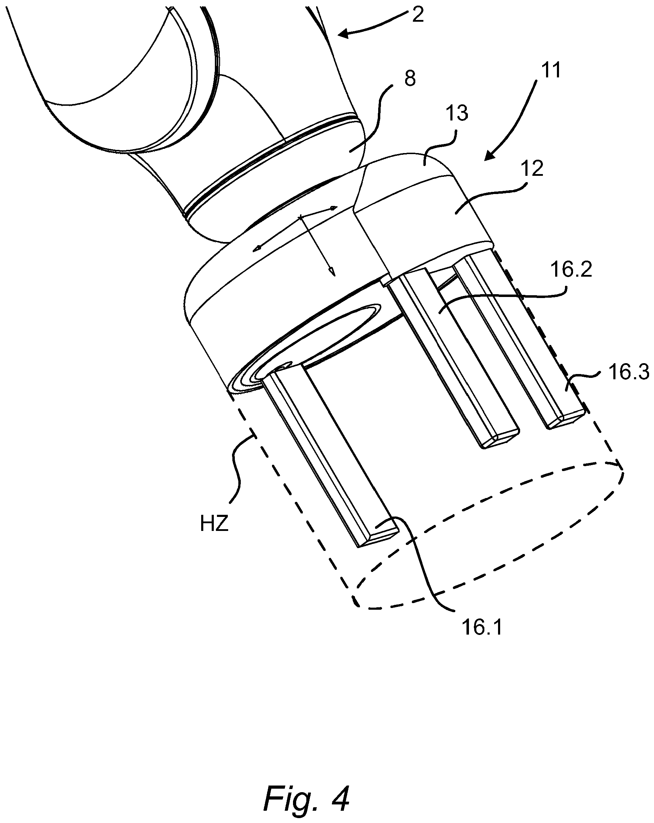

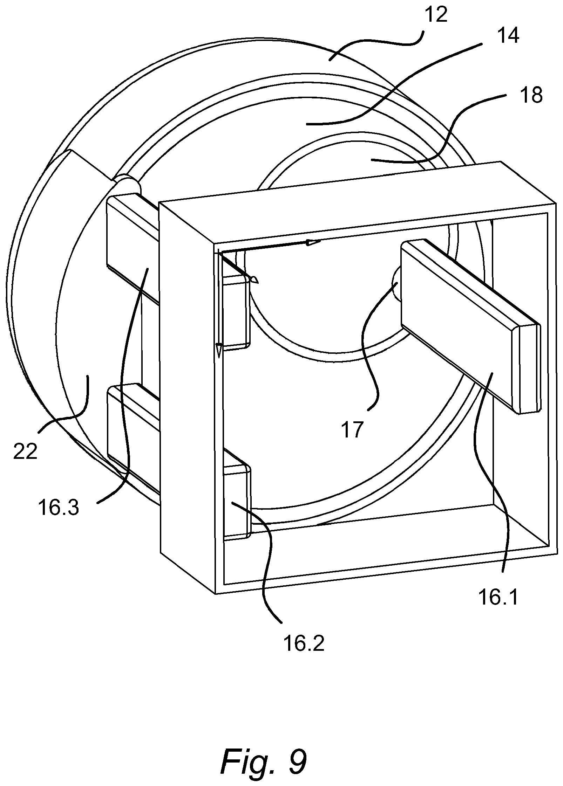

In den Figuren 4 bis 15 sind beispielhafte Ausführungsformen des erfindungsgemäßen Robotergreifers 11 schematisch gezeigte.

Der Robotergreifer 11 weist einen Greifergrundkörper 12 auf, der einen Anschlussflansch 13 umfasst, der zur Befestigung des Rotationsgreifers 11 an dem Werkzeugflansch 8 des Roboterarms 2 ausgebildet ist. Der Robotergreifer 11 weist außerdem ein Basisglied 14 auf, welches mittels eines ersten Drehgelenks 15.1, das von einem ersten Antriebsmotor A1 automatisch verstellbar ist, um eine erste Drehachse D1 drehbar am Greifergrundkörper 12 gelagert ist. Der Robotergreifer 11 weist des Weiteren einen ersten Greiferfinger 16.1 auf, der mittels eines zweiten Drehgelenks 15.2, das von einem zweiten Antriebsmotor A2 automatisch verstellbar ist, um eine zweite Drehachse D2, die parallel zur ersten Drehachse D1 ausgerichtet ist, bezüglich des Basisglieds 14 drehbar gelagert ist. Der Robotergreifer 11 weist darüber hinaus wenigstens einen weiteren Greiferfinger 16.2, 16.3 auf, wobei das zweite Drehgelenk 15.2 zum einzelnen Verstellen des ersten Greiferfingers 16.1 durch den zweiten Antriebsmotor A2 unabhängig von dem wenigstens einen weiteren Greiferfinger 16.2, 16.3 ausgebildet ist.

Im Falle des vorliegenden Ausführungsbeispiels weist der Robotergreifer 11 einen Fingerträger 17 auf, an dem der erste Greiferfinger 16.1 befestigt ist. Der Fingerträger 17 ist mittels eines dritten Drehgelenks 15.3, das von einem dritten Antriebsmotor A3 automatisch verstellbar ist, um eine dritte Drehachse D3, die parallel sowohl zur ersten Drehachse D1 als auch zur zweiten Drehachse D2 ausgerichtet ist, an einem Zwischenglied 18 des Robotergreifers 11 drehbar gelagert. Das Zwischenglied 18 ist seinerseits mittels des zweiten Drehgelenks 15.2 um die zweite Drehachse D2 drehbar an dem Basisglied 14 gelagert.

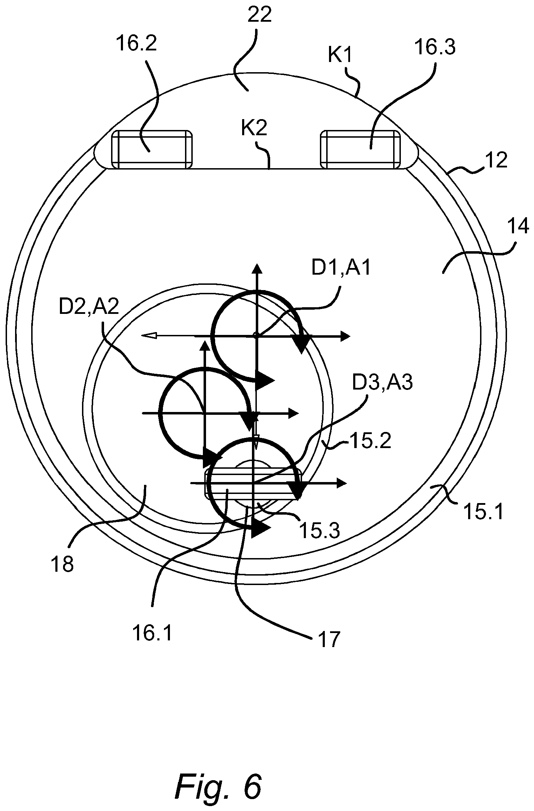

In einer solchen Ausführungsform bilden die Glieder des Robotergreifers 11, welche Glieder durch den Greifergrundkörper 12, das Basisglied 14, das Zwischenglied 18 und dem Fingerträger 17 gebildet werden, eine kinematische Kette von Gliedern, die durch das erste Drehgelenk 15.1, das zweite Drehgelenk 15.2 und das dritte Drehgelenk 15.3 drehbar verstellt werden können, wie dies insbesondere in Fig. 6 angedeutet ist. Insoweit kann der erste Greiferfinder 16.1 in insgesamt drei Freiheitsgraden bezüglich des Greifergrundkörpers 12 drehverstellt werden. Die drei Drehachsen D1, D2 und D3 des ersten Drehgelenk 15.1, des zweiten Drehgelenks 15.2 und des dritten Drehgelenks 15.3 sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 nicht nur jede beliebige Position einnehmen und dabei jede beliebige Orientierung aufweisen, sondern jede Position auch auf beliebigen Bewegungsbahnen erreichen. Dies gilt insbesondere dann, wenn die Abstände zwischen der ersten Drehachse D1 und der zweiten Drehachse D2 bzw. zwischen der zweiten Drehachse D2 und der dritten Drehachse D3 gleich sind. Wenn die Längenverhältnisse anders sind, hat dies zur Folge, dass Bereiche im Zentrum des Robotergreifers 11 ggf. nicht angefahren werden können.

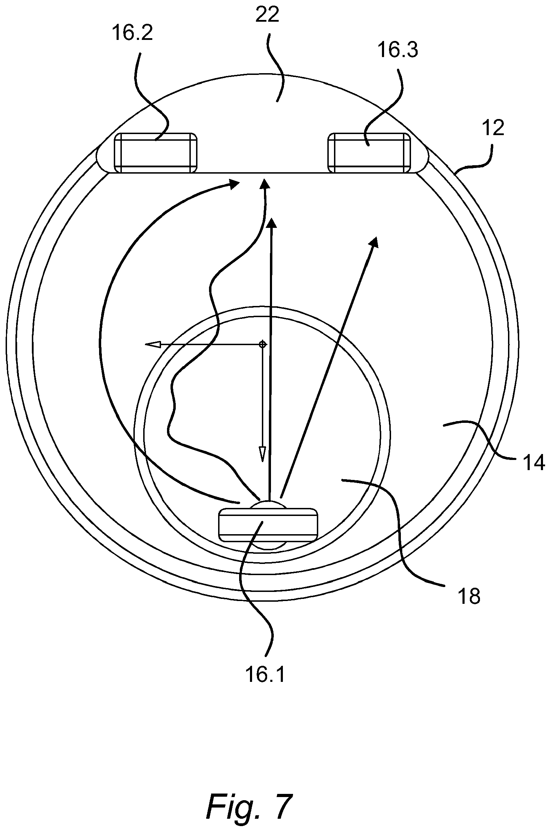

So kann der erste Greiferfinger 16.1 relativ zu dem zweiten Greiferfinger 16.2 und dem dritten Greiferfinger 16.3 eine universelle Bewegungsfreiheit in der Ebene aufweisen, d.h. jegliche Art von Greiferbewegung erzeugen. So können beispielsweise zwei gegenüberliegende Greiferfinger eine lineare Bewegung aufeinander zu und voneinander weg ausführen, aber auch eine zangenartige oder scherenartige Bewegung gegeneinander ausführen, d.h. ein Greiferfinger 16.1 auf einer Kreisbahn auf den anderen Greiferfinger 16.2 und/oder 16.3 zu bewegt bzw. von diesem weg bewegt werden, wie es in Fig. 7 gezeigt ist.

Der eine Greiferfinger 16.1 kann aber auch auf einer beliebigen sonstigen Bahn, wie dies auch in Fig. 7 verdeutlicht ist, auf den anderen Greiferfinger 16.2 und/oder 16.3 zu bewegt bzw. von diesem weg bewegt werden. Dabei kann der eine Greiferfinger 16.1 bei diesen Bewegungen seine Orientierung beliebig variieren.

Das Basisglied 14 weist eine rotationssymmetrische Außenmantelwand auf, an der das Basisglied 14 vollständig innerhalb der Außenkontur des Greifergrundkörpers 12 drehbar gelagert ist. Das Zwischenglied 18 des Robotergreifers 11 weist eine rotationssymmetrische Außenmantelwand auf, an der das Zwischenglied 18 vollständig innerhalb der Außenkontur des Basisglieds 14 drehbar gelagert ist. Der Fingerträger 17 des Robotergreifers 11 weist eine rotationssymmetrische Außenmantelwand auf, an der der Fingerträger 17 vollständig innerhalb der Außenkontur des Zwischenglieds 18 drehbar gelagert ist.

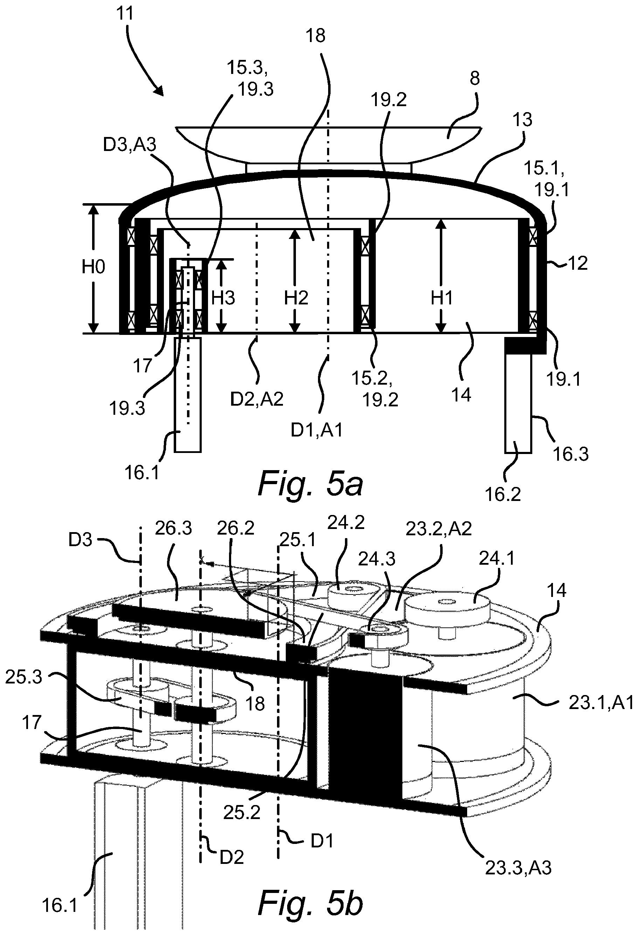

Wie insbesondere in Fig. 5 ersichtlich ist, weist das Basisglied 14 eine in Richtung der ersten Drehachse D1 weisende Bauhöhe H1 auf, die höchstens so groß ist, wie die in Richtung der ersten Drehachse D1 weisenden Bauhöhe H0 des Greifergrundkörpers 12. Das Zwischenglied 18 des Robotergreifers 11 weist dabei auch eine in Richtung der zweiten Drehachse D2 weisende Bauhöhe H2 auf, die höchstens so groß ist, wie die in Richtung der zweiten Drehachse D2 weisenden Bauhöhe H1 des Basisglieds 14. Der Fingerträger 17 des Robotergreifers 11 weist eine in Richtung der dritten Drehachse D3 weisende Bauhöhe H3 auf, die höchstens so groß ist, wie die in Richtung der dritten Drehachse D3 weisenden Bauhöhe H2 des Zwischenglieds 18.

In einer speziellen Ausführungsvariante weist das erste Drehgelenk 15.1 ein das Basisglied 14 umgebendes erstes Wälzlager 19.1 mit einem Innenring, einer Innenringlaufbahn für Wälzkörper, einem Außenring und einer Außenringlaufbahn auf, wobei der Innenring an der rotationssymmetrischen Außenmantelwand des Basisglieds 14 befestigt ist. Alternativ kann die Innenringlaufbahn an der rotationssymmetrischen Außenmantelwand des Basisglieds 14 ausgebildet sein.

Dabei weist das zweite Drehgelenk 15.2 ein das Zwischenglied 18 umgebendes zweites Wälzlager 19.2 mit einem Innenring, einer Innenringlaufbahn für Wälzkörper, einem Außenring und einer Außenringlaufbahn auf, wobei der Innenring an der rotationssymmetrischen Außenmantelwand des Zwischenglieds 18 befestigt ist. Alternativ kann die Innenringlaufbahn an der rotationssymmetrischen Außenmantelwand des Zwischenglieds 18 ausgebildet sein.

Außerdem weist das dritte Drehgelenk 15.3 ein den Fingerträger 17 umgebendes drittes Wälzlager 19.3 mit einem Innenring, einer Innenringlaufbahn für Wälzkörper, einem Außenring und einer Außenringlaufbahn auf, wobei der Innenring an der rotationssymmetrischen Außenmantelwand des Fingerträgers 17 befestigt ist. Alternativ kann die Innenringlaufbahn an der rotationssymmetrischen Außenmantelwand des Fingerträgers 17 ausgebildet sein. Bezüglich der Lager kann gelten, dass die Inneren in den Äußeren liegen, es kann aber sein, dass Segmente der inneren Träger weiter herausschauen und damit in den Bereich der äußeren Träger eindringen. Hierbei kann es sich z.B. um Segmente vom Antrieb handeln, die sich, wie beispielsweise in Fig. 5 gezeigt, oberhalb der Lagerungen, aber unterhalb des Grundkörpers befinden. Dies ist z.B. der Fall, wenn die Antriebe in den Greifergrundkörper ausgelagert sind.

Der erste Greiferfinger 16.1 kann in einem senkrecht zu seiner Längserstreckung liegenden Querschnitt eine von der Kreisform abweichende Querschnittskontur aufweisen.

Der zweite Greiferfinger 16.2 und der dritte Greiferfinger 16.3 sind im Falle der dargestellten Ausführungsbeispiele starr an dem Greifergrundkörper 12 befestigt.

Der zweite Greiferfinger 16.2 ist am Greifergrundkörper derart angeordnet befestigt, dass die Außenkontur des zweiten Greiferfingers 16.2 vollständig innerhalb einer vom Außenumfang des Greifergrundkörpers 12 bestimmten Hüllzylinderfläche HZ liegt. In gleicher Weise ist im Falle der dargestellten Ausführungsbeispiele auch der dritte Greiferfinger 16.3 am Greifergrundkörper 12 derart angeordnet befestigt, dass die Außenkontur des dritten Greiferfingers 16.3 vollständig innerhalb der vom Außenumfang des Greifergrundkörpers 12 bestimmten Hüllzylinderfläche HZ liegt, wie dies insbesondere in Fig.4 dargestellt ist.

Eine beispielhafte Antriebsanordnung des Robotergreifers 11, die mit der oben beschriebenen Lagerungsweise kombiniert sein kann, jedoch auch in Verbindung mit einer anderen Lagerungsweise kombiniert sein kann, ist in Fig. 5b dargestellt. Der Robotergreifer weist im Falle des vorliegenden Ausführungsbeispiels insgesamt drei Motoren 23.1, 23.2, 23.3 auf. Alle drei Motoren 23.1, 23.2, 23.3 befinden sich innerhalb des Basisglieds 14. Der erste Motor 23.1 ist somit abtriebsseitig angebracht und bewegt sich mit dem Basisglied 14 mit. Der erste Motor 23.1 bewegt die erste Drehachse D1. Der erste Motor 23.1 trägt auf seiner Motorwelle ein Stirnrad 24.1, das in einen Zahnkranz mit Innenverzahnung eingreift, der am Greifergrundkörper 12 befestigt ist. Der zweite Motor 23.2 bewegt die zweite Drehachse D2. Wird der erste Motor 23.1 bewegt, so bewegt sich der zweite Motor 23.2 entsprechend mit. Dazu ist auf der Motorwelle des zweiten Motors 23.2 eine erste Antriebszahnriemenscheibe 24.2 angebracht. Auf der ersten Antriebszahnriemenscheibe 24.2 läuft ein erster Zahnriemen 25.1. Der erste Zahnriemen 25.1 läuft außerdem auf einer ersten Abtriebszahnriemenscheibe 26.2, die an dem Zwischenglied 18 befestigt ist. Dreht sich der zweite Motor 23.2 wird folglich das Zwischenglied 18 gedreht. Der dritte Motor 23.3 trägt auf seiner Motorwelle eine zweite Antriebszahnriemenscheibe 24.3. Auf der zweiten Antriebszahnriemenscheibe 24.2 läuft ein zweiter Zahnriemen 25.2. Der zweite Zahnriemen 25.2 läuft außerdem auf einer zweiten Abtriebszahnriemenscheibe 26.3, die über einen dritten Zahnriemen 25.3 mit dem Fingerträger 17 gekoppelt ist. Der dritte Motor 23.3 ist demgemäß antriebsseitig vor die Drehachse D2 ausgelagert und überbrückt die Drehachse D2 und weist durch den dritten Zahnriemen 25.3 eine zusätzliche Kopplung auf. Dreht sich der dritte Motor 23.3 wird folglich der Fingerträger 17 und damit der erste Greiferfinger 16.1 gedreht.

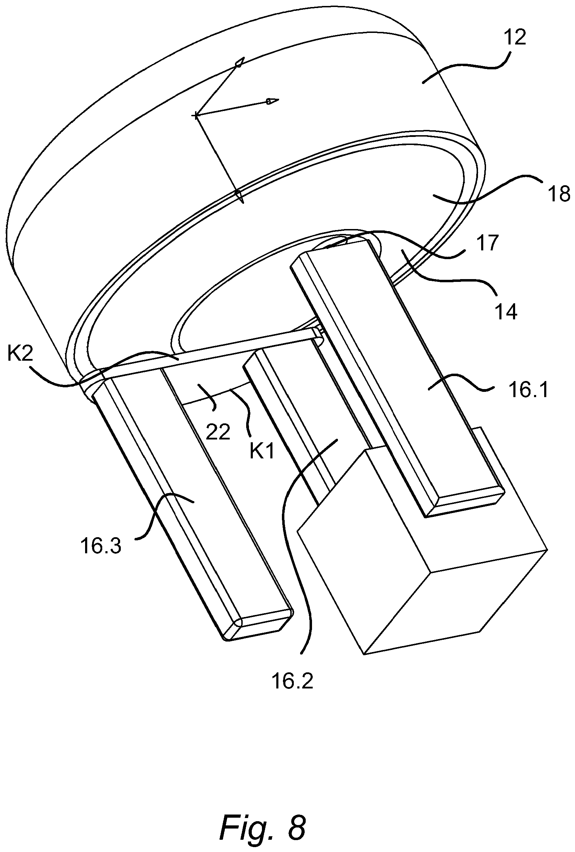

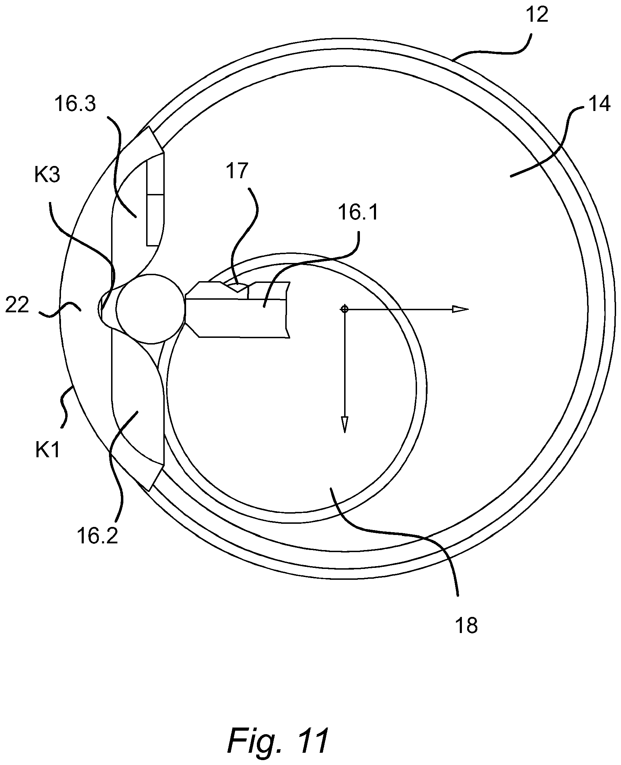

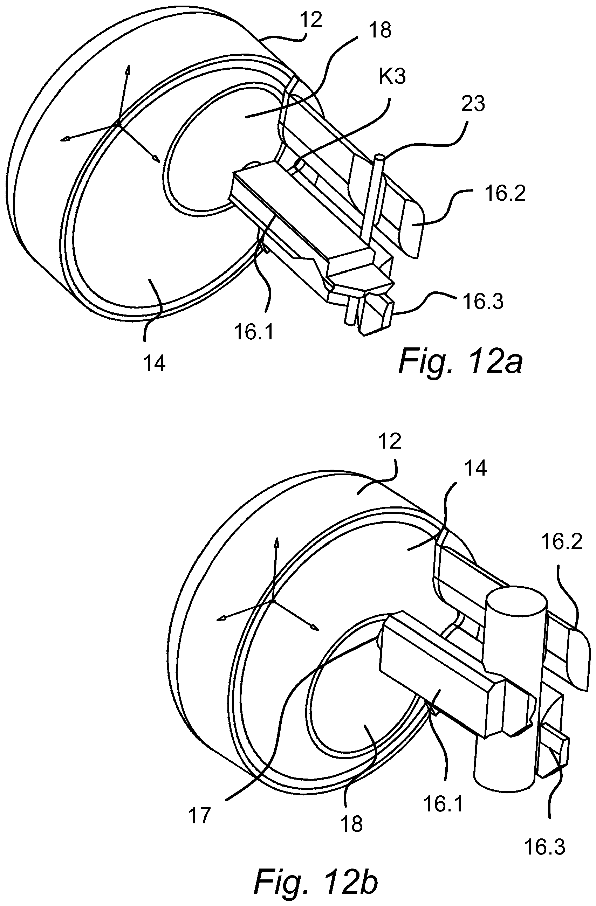

Wenn der zweite Greiferfinger 16.2 und der dritte Greiferfinger 16.3 wie im Ausführungsbeispiel ausgebildet, am Greifergrundkörper 12 starr befestigt sind, dann kann der zweite Greiferfinger 16.2 und der dritte Greiferfinger 16.3 auf einer Tragplatte 22 befestigt sein, welche über die äußere Kreiskontur des Basisglieds 12 nach innen in Richtung der ersten Drehachse D1 des Robotergreifers 11 vorspringt, wie dies beispielsweise in Fig. 6 gezeigt ist. Die Tragplatte 22 kann von einer Kreissegmentscheibe gebildet werden, die mit ihrer kreisbogenförmigen Konturkante K1 an einem Randbereich des Greifergrundkörpers 12 befestigt ist und über einen kreissegmentförmigen Bereich des Basisglieds 14 hinweg nach innen in Richtung der ersten Drehachse D1 des Robotergreifers 11 vorspringt. Dies bedeutet, dass das Basisglied 14 unter der Tragplatte 22 hindurch drehen kann, wie dies beispielsweise in Fig. 8 dargestellt ist, wodurch der an dem Basisglied 14 gelagerte erste Greiferfinger 16.1 unmittelbar bis an den zweiten Greiferfinger 16.2 bzw. den dritten Greiferfinger 16.3 herangedreht werden kann, wie dies in Fig. 11 und Fig. 12a, Fig. 12b veranschaulicht ist. Der erste Greiferfinger 16.1 kann demgemäß bis zu einer Kollision an den zweiten Greiferfinger 16.2 bzw. den dritten Greiferfinger 16.3 herangedreht werden, so dass der erste Greiferfinger 16.1 mit dem zweiten Greiferfinger 16.2 bzw. mit dem dritten Greiferfinger 16.3 bis in eine Schließstellung aufeinander zu gedreht werden können, so dass sogar sehr dünne Bauteile, wie beispielsweise dünne Bleche, einzelne Papierblätter oder dünne Stifte 23 gegriffen werden können.

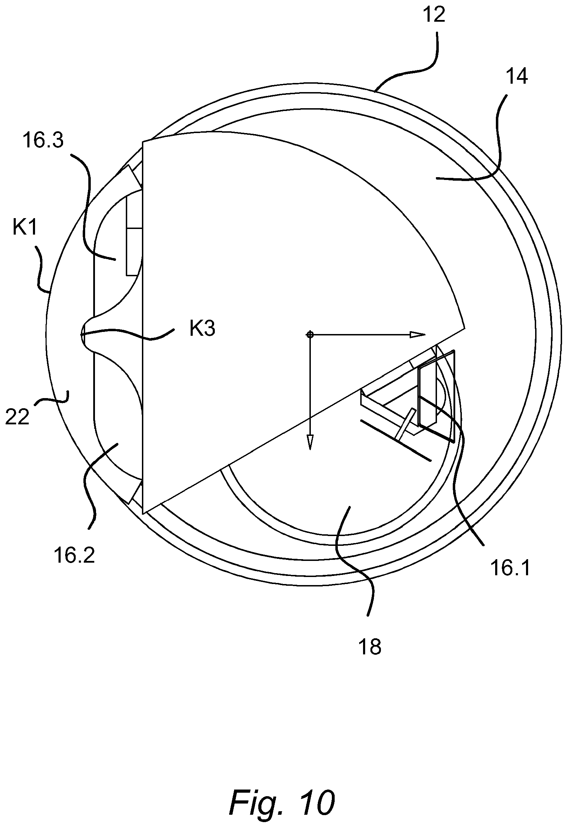

In einer Abwandlung einer kreissegmentscheibenförmigen Tragplatte 22 kann eine gerade Kante K2 (Fig. 6) der Kreissehne durch eine eingebuchtete Kante K3 (Fig. 10- Fig. 12b) ersetzt sein. Eine solche eingebuchtete Kante K3 kann in einem zwischen dem zweiten Greiferfinger 16.2 und dem vom zweiten Greiferfinger 16.2 beabstandet angeordneten dritten Greiferfinger 16.3 liegenden Bereich der Kreissehne an der Tragplatte 22 ausgebildet sein. Eine solche Einbuchtung ermöglicht es, den ersten Greiferfinger 16.1 sogar zwischen den zweiten Greiferfinger 16.2 und den dritten Greiferfinger 16.3 fahren zu können, so dass der erste Greiferfinger 16.1 zumindest teilweise oder sogar vollständig zwischen den zweiten Greiferfinger 16.2 und den dritten Greiferfinger 16.3 positioniert werden kann. Ein Hineinfahren ist auch möglich, wenn die Kante nicht eingebuchtet ist, aber dafür die Greiferfinger, speziell der erste Greiferfinger, insbesondere im Bereich oberhalb der Greiferfläche die entsprechende Form ausweist.

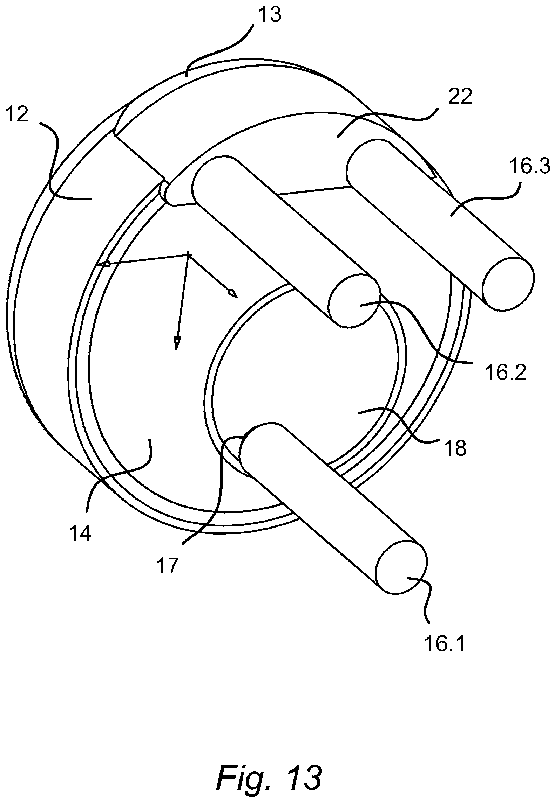

In der in Fig. 13 gezeigten Ausführungsvariante ist der erste Greiferfinger 16.1 unangetrieben ausgebildet und insoweit starr an dem Fingerträger 17 bzw. an dem Zwischenglied 18 befestigt.

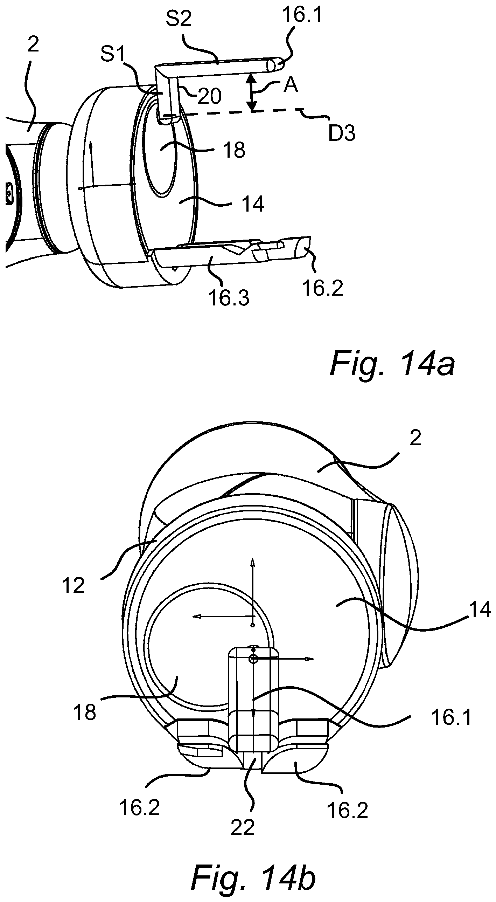

Wie die Varianten der Fig. 14a und Fig. 14b zeigen, kann der erste Greiferfinger 16.1 mittels eines Hebels 20, der den ersten Greiferfinger 16.1 mit seiner Längserstreckung zumindest im Wesentlichen oder genau parallel zur dritten Drehachse D3 des dritten Drehgelenks 15.3, welches den Fingerträger 17 trägt, ausgerichtet und in einem Abstand A von der dritten Drehachse D3 angeordnet, an dem Fingerträger 17 befestigt sein.

Der erste Greiferfinger 16.1 und/oder der zweite Greiferfinger 16.2 und/oder der dritte Greiferfinger 16.3 kann demgemäß beispielsweise von einem L-förmigen Glied gebildet werden, wobei ein mit dem Fingerträger 17 verbundener erster Schenkel S1 des L-förmigen Glieds den Hebel 20 bildet und der andere Schenke, d.h. ein zweiter Schenkel S2 des L-förmigen Glieds einen Greifabschnitt des ersten Greiferfingers 16.1 bildet, der in seiner Längserstreckung parallel zu den Drehachsen D1-D3 der Drehgelenke 15.1 bis 15.3 des Robotergreifers 11 ausgerichtet ist, wie dies in Fig. 14a und Fig. 14b gezeigt ist.

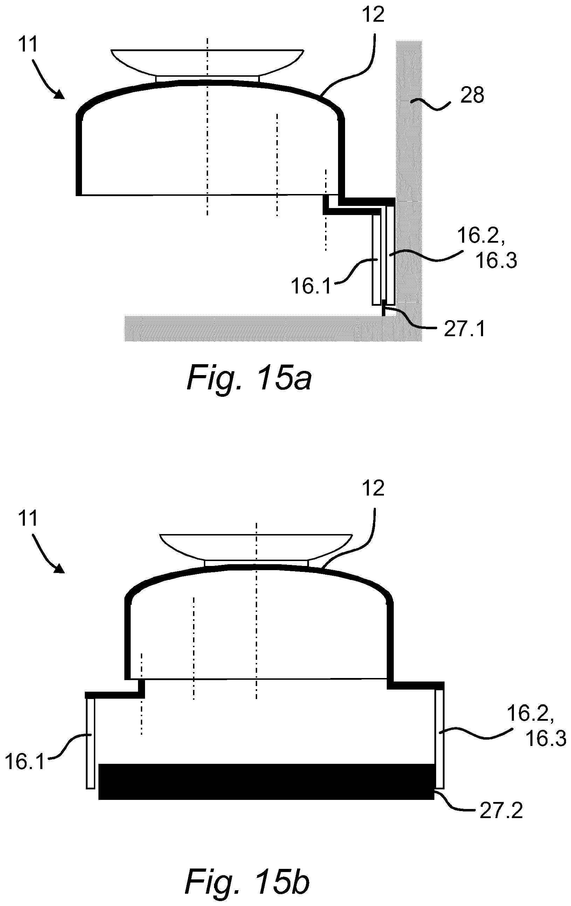

In der Fig. 15a ist eine erste Konfiguration gezeigt, bei welcher der Robotergreifer 11 mit seitlich über den Greifergrundkörper 12 herausragenden Greiferfingern 16.1, 16.2, 16.3 in Form von L-förmigen Gliedern ausgebildet ist, zum Greifen sehr kleiner Gegenstände 27.1, insbesondere in der Nähe einer Begrenzungswand 28.

Der zweite Greiferfinger 16.2, oder der zweite Greiferfinger 16.2 und der dritte Greiferfinger 16.3 sind in der dargestellten Ausführungsvariante in ihrer Form so gestaltet, dass sie mit ihrer jeweiligen Längserstreckung aus dem Greifergrundkörper 12, wie dargestellt, seitlich herauskragen. Der erste Greiferfinger 16.1 weist dazu eine Form auf, die es ihm gestattet den kleinen Gegenstände 27.1 auch außerhalb der Außenkontur des Greifergrundkörpers 12 greifen zu können. Dabei können der zweite Greiferfinger 16.2 und der erste Greiferfinger 16.1 sehr nahe an die Begrenzungswand 28 herangefahren werden, wobei der Greifergrundkörper 12 sich in einem größeren Abstand zur Begrenzungswand 28 befindet.

In der Fig. 15b ist eine zweite Konfiguration gezeigt, bei welcher der Robotergreifer 11 mit seitlich diametral gegenüberliegend über den Greifergrundkörper 12 herausragenden Greiferfingern 16.1, 16.2, 16.3 in Form von L-förmigen Gliedern ausgebildet ist, zum Greifen von Gegenständen 27.2, die größer sind, als der Greifergrundkörper 12 selbst.

In dieser Konfiguration der Greiferfinger 16.1, 16.2, 16.3, d.h. in alternativen Gelenkstellungen für den ersten Greiferfinger 16.1 bzw. den zweiten Greiferfinger 16.2 und/oder den dritten Greiferfinger 16.3 kragt der erste Greiferfinger 16.1, wie dargestellt, an einer diametral dem zweiten Greiferfinger 16.2 und dem dritten Greiferfinger 16.3 gegenüberliegenden Seite aus dem Greifergrundkörper 12 seitlich heraus. Dadurch kann sich eine Zangenöffnungsweite zwischen dem ersten Greiferfinger 16.1 und dem zweiten Greiferfinger 16.2 bzw. dem dritten Greiferfinger 16.3 ergeben, die deutlich größer ist, als die Breite des Greifergrundkörpers 12 selbst.

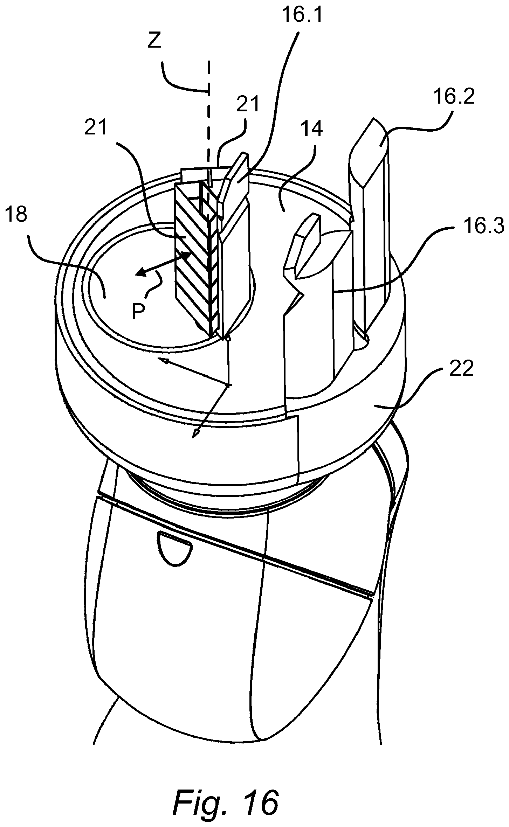

In der Fig. 16 ist eine beispielhafte Ausführungsvariante gezeigt, bei welcher der erste Greiferfinger 16.1 wenigstens einen Außenmantelwandabschnitt 21 aufweist, der bezüglich einer parallel zur Längserstreckung des ersten Greiferfingers 16.1 sich erstreckenden Zentrumsachse Z des ersten Greiferfingers 16.1 in seinem Abstand von dieser Zentrumsachse Z verstellbar ausgebildet ist, wie dies durch den Pfeil P angedeutet ist.

In einer speziellen Ausführungsform, wie sie in der Fig. 16 dargestellt ist, kann der erste Greiferfinger 16.1 mehrere in seiner Längserstreckung übereinander angeordnete jeweils separat verstellbare oder elastische Außenwandabschnitte 21 aufweisen. Im Falle eines im Querschnitt dreieckigen ersten Greiferfingers 16.1 können beispielsweise zwei von drei der ebenen Außenwände mehrere, beispielsweise sieben übereinander angeordnete jeweils separat verstellbare Außenwandabschnitte 21 aufweisen. Jeder Außenwandabschnitt 21 kann von einem Federbügel gebildet werden, der an dem ersten Greiferfinger 16.1 befestigt ist.

## Patentansprüche

1. Robotergreifer, aufweisend einen Greifergrundkörper (12), der einen Anschlussflansch (13) aufweist, der zur Befestigung des Rotationsgreifers (11) an einem Werkzeugflansch (8) eines Roboterarms (2) ausgebildet ist, des Weiteren aufweisend ein Basisglied (14), welches mittels eines ersten Drehgelenks (15.1), das von einem ersten Antriebsmotor (A1) automatisch verstellbar ist, um eine erste Drehachse (D1) drehbar am Greifergrundkörper (12) gelagert ist, sowie aufweisend einen ersten Greiferfinger (16.1), der mittels eines zweiten Drehgelenks (15.2), das von einem zweiten Antriebsmotor (A2) automatisch verstellbar ist, um eine zweite Drehachse (D2), die parallel zur ersten Drehachse (D1) ausgerichtet ist, bezüglich des Basisglieds (14) drehbar gelagert ist und aufweisend wenigstens einen weiteren Greiferfinger (16.2, 16.3), wobei das zweite Drehgelenk (15.2) zum einzelnen Verstellen des ersten Greiferfingers (16.1) durch den zweiten Antriebsmotor (A2) unabhängig von dem wenigstens einen weiteren Greiferfinger (16.2, 16.3) ausgebildet ist, **dadurch gekennzeichnet, dass** das Basisglied (14) eine rotationssymmetrische Außenmantelwand aufweist, an der das Basisglied (14) vollständig innerhalb der Außenkontur des Greifergrundkörpers (12) drehbar gelagert ist, ein Zwischenglied (18) des Robotergreifers (11) eine rotationssymmetrische Außenmantelwand aufweist, an der das Zwischenglied (18) vollständig innerhalb der Außenkontur des Basisglieds (14) drehbar gelagert ist, und ein Fingerträger (17) des Robotergreifers (11) eine rotationssymmetrische Außenmantelwand aufweist, an der der Fingerträger (17) vollständig innerhalb der Außenkontur des Zwischenglieds (18) drehbar gelagert ist.

2. Robotergreifer nach Anspruch 1, **gekennzeichnet durch** einen den ersten Greiferfinger (16.1) aufweisenden Fingerträger (17), der mittels eines dritten Drehgelenks (15.3), das von einem dritten Antriebsmotor (A3) automatisch verstellbar ist, um eine dritte Drehachse (D3), die parallel sowohl zur ersten Drehachse (D1) als auch zur zweiten Drehachse (D2) ausgerichtet ist, an einem Zwischenglied (18) des Robotergreifers (11) drehbar gelagert ist, welches Zwischenglied (18) seinerseits mittels des zweiten Drehgelenks (15.2) um die zweite Drehachse (D2) drehbar an dem Basisglied (14) gelagert ist.

3. Robotergreifer nach Anspruch 1 oder 2, **dadurch gekennzeichnet, dass** das Basisglied (14) eine in Richtung der ersten Drehachse (D1) weisende Bauhöhe (H1) aufweist, die höchstens so groß ist, wie die in Richtung der ersten Drehachse (D1) weisenden Bauhöhe (H0) des Greifergrundkörpers (12), ein Zwischenglied (18) des Robotergreifers (11) eine in Richtung der zweiten Drehachse (D2) weisende Bauhöhe (H2) aufweist, die höchstens so groß ist, wie die in Richtung der ersten Drehachse (D1) weisenden Bauhöhe (H1) des Basisglieds (14), und ein Fingerträger (17) des Robotergreifers (11) eine in Richtung der dritten Drehachse (D3) weisende Bauhöhe (H3) aufweist, die höchstens so groß ist, wie die in Richtung der zweiten Drehachse (D2) weisenden Bauhöhe (H2) des Zwischenglieds (18).

4. Robotergreifer nach einem der Ansprüche 1 bis 3, **dadurch gekennzeichnet, dass**
- das erste Drehgelenk (15.1) ein das Basisglied (14) umgebendes erstes Lager aufweist, insbesondere erstes Wälzlager (19.1) mit einem Innenring, einer Innenringlaufbahn für Wälzkörper, einem Außenring und einer Außenringlaufbahn aufweist, wobei der Innenring an der rotationssymmetrischen Außenmantelwand des Basisglieds (14) befestigt ist oder die Innenringlaufbahn an der rotationssymmetrischen Außenmantelwand des Basisglieds (14) ausgebildet ist,
- das zweite Drehgelenk (15.2) ein das Zwischenglied (18) umgebendes zweites Lager aufweist, insbesondere zweites Wälzlager (19.2) mit einem Innenring, einer Innenringlaufbahn für Wälzkörper, einem Außenring und einer Außenringlaufbahn aufweist, wobei der Innenring an der rotationssymmetrischen Außenmantelwand des Zwischenglieds (18) befestigt ist oder die Innenringlaufbahn an der rotationssymmetrischen Außenmantelwand des Zwischenglieds (18) ausgebildet ist, und
- das dritte Drehgelenk (15.3) ein den Fingerträger (17) umgebendes drittes Lager aufweist, insbesondere drittes Wälzlager (19.3) mit einem Innenring, einer Innenringlaufbahn für Wälzkörper, einem Außenring und einer Außenringlaufbahn aufweist, wobei der Innenring an der rotationssymmetrischen Außenmantelwand des Fingerträgers (17) befestigt ist oder die Innenringlaufbahn an der rotationssymmetrischen Außenmantelwand des Fingerträgers (17) ausgebildet ist.

5. Robotergreifer nach einem der Ansprüche 1 bis 4, **dadurch gekennzeichnet, dass** der erste Antriebsmotor (A1) innerhalb des Greifergrundkörpers (12) oder des Basisglieds (14) angeordnet ist, der zweite Antriebsmotor (A2) innerhalb des Basisglieds (14), des Zwischenglieds (18), oder des Greifergrundkörpers(12) angeordnet ist, und/oder der dritte Antriebsmotor (A3) innerhalb des Zwischenglieds (18), des Fingerträgers (17), des Basisglieds (14) oder des Greifergrundkörpers (12) angeordnet ist.

6. Robotergreifer nach einem der Ansprüche 1 bis 5, **dadurch gekennzeichnet, dass** der erste Antriebsmotor (A1) zum kraft- und/oder momentgeregelten Ansteuern ausgebildet ist, der zweite Antriebsmotor (A2) zum kraft- und/oder momentgeregelten Ansteuern ausgebildet ist, und/oder der dritte Antriebsmotor (A3) zum kraft- und/oder momentgeregelten Ansteuern ausgebildet ist.

7. Robotergreifer nach einem der Ansprüche 1 bis 6, **dadurch gekennzeichnet, dass** der erste Greiferfinger (16.1) in einem senkrecht zu seiner Längserstreckung liegenden Querschnitt eine von der Kreisform abweichende Querschnittskontur aufweist.

8. Robotergreifer nach einem der Ansprüche 1 bis 7, **dadurch gekennzeichnet, dass** der weitere Greiferfinger ein zweiter Greiferfinger (16.2) oder ein dritter Greiferfinger (16.3) ist, der starr an dem Greifergrundkörper (12) befestigt ist.

9. Robotergreifer nach einem der Ansprüche 1 bis 7, **dadurch gekennzeichnet, dass** der weitere Greiferfinger ein zweiter Greiferfinger (16.2) oder ein dritter Greiferfinger (16.3) ist, der um eine parallel zu seiner Längsachse ausgerichteten Drehachse an dem Greifergrundkörper (12) automatisiert verdrehbar gelagert ist.

10. Robotergreifer nach Anspruch 9, **dadurch gekennzeichnet, dass** der zweite Greiferfinger (16.2) und/oder der dritte Greiferfinger (16.3) um die erste Drehachse des Basisglieds (14) an dem Greifergrundkörper automatisiert verdrehbar gelagert ist.

11. Robotergreifer nach Anspruch 9, **dadurch gekennzeichnet, dass** der zweite Greiferfinger (16.2) am Greifergrundkörper (12) derart angeordnet befestigt ist, dass die Außenkontur des zweiten Greiferfingers (16.2) vollständig innerhalb einer vom Außenumfang des Greifergrundkörpers (12) bestimmten Hüllzylinderfläche (HZ) liegt, und/oder der dritte Greiferfinger (16.3) am Greifergrundkörper (12) derart angeordnet befestigt ist, dass die Außenkontur des dritten Greiferfingers (16.3) vollständig innerhalb der vom Außenumfang des Greifergrundkörpers (12) bestimmten Hüllzylinderfläche (HZ) liegt.

12. Robotergreifer nach einem der Ansprüche 1 bis 11,
**dadurch gekennzeichnet, dass** der erste Greiferfinger (16.1) unangetrieben an dem Fingerträger (17) oder dem Zwischenglied (18) um eine passive Drehachse drehbar gelagert ist.

13. Robotergreifer nach einem der Ansprüche 1 bis 12,
**dadurch gekennzeichnet, dass** der erste Greiferfinger (16.1), der zweite Greiferfinger (16.2) und/oder der dritte Greiferfinger (16.3) mittels eines Hebels (20), der den ersten Greiferfinger (16.1) bzw. den zweiten Greiferfinger (16.2) und/oder den dritten Greiferfinger (16.3) mit seiner Längserstreckung zumindest im Wesentlichen oder genau parallel zur dritten Drehachse (D3) des dritten Drehgelenks (15.3), welches den Fingerträger (17) trägt, ausgerichtet und in einem insbesondere variablen Abstand (A) von der dritten Drehachse (D3) angeordnet, an dem Fingerträger (17) befestigt ist.

14. Robotergreifer nach einem der Ansprüche 1 bis 13,
**dadurch gekennzeichnet, dass** der erste Greiferfinger (16.1) und/oder der zweite Greiferfinger (16.2) und/oder der dritte Greiferfinger (16.3) wenigstens einen Außenmantelwandabschnitt (21) aufweist, der bezüglich einer im Wesentlichen parallel zur Längserstreckung des ersten Greiferfingers (16.1) bzw. des zweiten Greiferfingers (16.2), bzw. des dritten Greiferfingers (16.3) sich erstreckenden Zentrumsachse des ersten Greiferfingers (16.1) bzw. des zweiten Greiferfingers (16.2), bzw. des dritten Greiferfingers (16.3) in seinem Abstand von dieser Zentrumsachse (Z) verstellbar ausgebildet ist.

## Claims

1. Robot gripper comprising a gripper base body (12) having a connecting flange (13) adapted to attach the robot gripper (11) to a tool flange (8) of a robot arm (2), further comprising a base link (14) which is rotatably mounted on the gripper base body (12) about a first rotational axis (D1) by means of a first rotational joint (15.1) which is automatically adjustable by a first drive motor (A1), and comprising a first gripper finger (16.1) which is rotatably mounted with respect to the base link (14) about a second rotational axis (D2) which is aligned parallel to the first rotational axis (D1) by means of a second rotational joint (15.2) which is automatically adjustable by a second drive motor (A2) and comprising at least one further gripper finger (16.2, 16.3), wherein the second rotational joint (15.2) is configured to individually adjusting the first gripper finger (16.1) by the second drive motor (A2) independently of the at least one further gripper finger (16.2, 16.3), **characterized in that** the base link (14) has a rotationally symmetrical outer lateral surface on which the base link (14) is rotatably mounted entirely within the outer contour of the gripper base body (12), an intermediate link (18) of the robot gripper (11) has a rotationally symmetrical outer lateral surface on which the intermediate link (18) is rotatably mounted entirely within the outer contour of the base link (14), and a finger carrier (17) of the robot gripper (11) has a rotationally symmetrical outer lateral surface on which the finger carrier (17) is rotatably mounted completely within the outer contour of the intermediate link (18).

2. Robot gripper according to claim 1, **characterized by** a finger carrier (17) comprising the first gripper finger (16.1), which is rotatable mounted on an intermediate link (18) of the robot gripper (11) by means of a third rotational joint (15.3), which is automatically adjustable by a third drive motor (A3), about a third rotational axis (D3), which is aligned parallel both to the first rotational axis (D1) and to the second rotational axis (D2), the intermediate link (18) is in turn rotatably mounted on the base link (14) about the second rotational axis (D2) by means of the second rotational joint (15.2).

3. Robot gripper according to claim 1 or 2, **characterized in that** the base link (14) has an overall height (H1) pointing in the direction of the first rotational axis (D1) which is at most as large as the overall height (H0) of the gripper base body (12) pointing in the direction of the first rotational axis (D1), an intermediate link (18) of the robot gripper (11) has an overall height (H2) pointing in the direction of the second rotational axis (D2), which is at most as large as the overall height (H1) of the base link (14) pointing in the direction of the first rotational axis (D1), and a finger carrier (17) of the robot gripper (11) has an overall height (H3) pointing in the direction of the third rotational axis (D3) which is at most as large as the overall height (H2) of the intermediate link (18) pointing in the direction of the second rotational axis (D2).

4. Robot gripper according to one of claims 1 to 3, **characterized in that**
- the first rotational joint (15.1) has a first bearing surrounding the base link (14), in particular a first rolling bearing (19.1) with an inner ring, an inner ring raceway for rolling elements, an outer ring and an outer ring raceway, the inner ring being fastened to the rotationally symmetrical outer lateral surface of the base link (14) or the inner ring raceway being formed on the rotationally symmetrical outer lateral surface of the base link (14),
- the second rotational joint (15.2) has a second bearing surrounding the intermediate link (18), in particular a second rolling bearing (19.2) with an inner ring, an inner ring raceway for rolling elements, an outer ring and an outer ring raceway, the inner ring being fastened to the rotationally symmetrical outer lateral surface of the intermediate link (18) or the inner ring raceway being formed on the rotationally symmetrical outer lateral surface of the intermediate link (18), and
- the third rotational joint (15.3) has a third bearing surrounding the finger carrier (17), in particular a third rolling bearing (19.3) with an inner ring, an inner ring raceway for rolling elements, an outer ring and an outer ring raceway, the inner ring being fastened to the rotationally symmetrical outer lateral surface of the finger carrier (17) or the inner ring raceway being formed on the rotationally symmetrical outer lateral surface of the finger carrier (17).

5. Robot gripper according to one of claims 1 to 4, **characterized in that** the first drive motor (A1) is disposed within the gripper base body (12) or the base link (14), the second drive motor (A2) is disposed within the base link (14), the intermediate link (18), or the gripper base body (12), and/or the third drive motor (A3) is disposed within the intermediate link (18), the finger carrier (17), the base link (14), or the gripper base body (12).

6. Robot gripper according to one of claims 1 to 5, **characterized in that** the first drive motor (A1) is configured for force- and/or torque-controlled actuation, the second drive motor (A2) is configured for force- and/or torque-controlled actuation, and/or the third drive motor (A3) is configured for force- and/or torque-controlled actuation.

7. Robot gripper according to one of claims 1 to 6, **characterized in that** the first gripper finger (16.1) has a cross-sectional contour deviating from the circular shape in a cross-section lying perpendicular to its longitudinal extension.

8. Robot gripper according to one of claims 1 to 7, **characterized in that** the further gripper finger is a second gripper finger (16.2) or a third gripper finger (16.3) rigidly attached to the gripper base body (12).

9. Robot gripper according to one of claims 1 to 7, **characterized in that** the further gripper finger is a second gripper finger (16.2) or a third gripper finger (16.3) which is mounted on the gripper base body (12) automatically rotatable about an axis of rotation aligned parallel to its longitudinal axis.

10. Robot gripper according to claim 9, **characterized in that** the second gripper finger (16.2) and/or the third gripper finger (16.3) is mounted on the gripper base body automatically rotatable about the first axis of rotation of the base link (14).

11. Robot gripper according to claim 9, **characterized in that** the second gripper finger (16.2) is fastened to the gripper base body (12) in such a way that the outer contour of the second gripper finger (16.2) lies completely within an envelope cylinder surface (HZ) determined by the outer circumference of the gripper base body (12), and/or the third gripper finger (16. 3) is fastened to the gripper base body (12) in such a way that the outer contour of the third gripper finger (16.3) lies completely within the enveloping cylinder surface (HZ) determined by the outer circumference of the gripper base body (12).

12. Robot gripper according to one of claims 1 to 11, **characterized in that** the first gripper finger (16.1) is mounted on the finger carrier (17) or the intermediate link (18) rotatable about a passive axis of rotation without being driven.

13. Robot gripper according to one of the claims 1 to 12, **characterized in that** the first gripper finger (16.1), the second gripper finger (16.2) and/or the third gripper finger (16.3) are mounted on the finger carrier (17) by means of a lever (20) which arranges the first gripper finger (16.1) and/or the second gripper finger (16.2) and/or the third gripper finger (16. 3) with its longitudinal extension aligned at least substantially or exactly parallel to the third rotational axis (D3) of the third rotational joint (15.3), in particular in a variable distance (A) from the third rotational axis (D3), the third rotational joint (15.3) carrying the finger carrier (17).

14. Robot gripper according to one of the claims 1 to 13, **characterized in that** the first gripper finger (16.1) and/or the second gripper finger (16.2) and/or the third gripper finger (16.3) has at least one outer lateral surface section (21) which is adjustable in its distance from a central axis (Z) of the first gripper finger (16.1), the second gripper finger (16.2) or the third gripper finger (16.3), which central axis (Z) extends substantially parallel to the longitudinal extension of the first gripper finger (16.1) and/or the second gripper finger (16.2) and/or the third gripper finger (16.3), respectively.

## Revendications

1. Préhenseur de robot, comprenant un corps de base de préhenseur (12), qui présente une bride de raccordement (13), qui est réalisée pour la fixation du préhenseur rotatif (11) sur une bride d'outil (8) d'un bras de robot (2), présentant en outre un élément de base (14) qui est monté sur le corps de base de préhenseur (12) de manière à pouvoir tourner autour d'un premier axe de rotation (D1) au moyen d'une première articulation rotative (15.1), qui est réglable automatiquement par un premier moteur d'entraînement (A1), qui comprenant aussi un premier doigt de préhension (16. 1) qui est monté de manière à pouvoir tourner autour d'un deuxième axe de rotation (D2) qui est orienté parallèlement au premier axe de rotation (D1), par rapport à l'élément de base (14), au moyen d'une deuxième articulation rotative (15.2) qui est réglable automatiquement par un deuxième moteur d'entraînement (A2), et comportant au moins un autre doigt de préhension (16.2, 16.3), la deuxième articulation rotative (15. 2) pour le réglage individuel du premier doigt de préhension (16.1) par le deuxième moteur d'entraînement (A 2) étant réalisée indépendamment dudit au moins un autre doigt de préhension (16.2, 16.3). 3), **caractérisé en ce que** l'élément de base (14) présente une paroi d'enveloppe extérieure à symétrie de rotation, sur laquelle l'élément de base (14) est monté de manière à pouvoir tourner entièrement à l'intérieur du contour extérieur du corps de base de préhenseur (12), un élément intermédiaire (18) du préhenseur de robot (11) présente une paroi d'enveloppe extérieure à symétrie de révolution, sur laquelle l'élément intermédiaire (18) est monté de manière à pouvoir tourner entièrement à l'intérieur du contour extérieur de l'élément de base (14), et un support de doigt (17) du préhenseur de robot (11) présente une paroi d'enveloppe extérieure à symétrie de révolution sur laquelle le support de doigt (17) est monté de manière rotative entièrement à l'intérieur du contour extérieur de l'élément intermédiaire (18).

2. Préhenseur de robot selon la revendication 1, **caractérisé par** un support de doigt (17) présentant le premier doigt de préhension (16. 1), lequel est monté de manière à pouvoir tourner sur un élément intermédiaire (18) du préhenseur de robot (11) au moyen d'une troisième articulation rotative (15.3), qui peut être réglée automatiquement par un troisième moteur d'entraînement (A 3), autour d'un troisième axe de rotation (D3) qui est orienté parallèlement aussi bien au premier axe de rotation (D1) qu'au deuxième axe de rotation (D2), lequel élément intermédiaire (18) est lui-même monté de manière à pouvoir tourner autour du deuxième axe de rotation (D2) sur l'élément de base (14) au moyen de la deuxième articulation rotative (15.2).

3. Préhenseur de robot selon la revendication 1 ou 2, **caractérisée en ce que** l'élément de base (14) présente une hauteur de construction (H1) orientée en direction du premier axe de rotation (D1), laquelle est au maximum aussi grande que la hauteur de construction (H0) du corps de base du préhenseur (12), orientée en direction du premier axe de rotation (D1), un élément intermédiaire (18) du préhenseur de robot (11) présente une hauteur de construction (H2) orientée en direction du deuxième axe de rotation (D2), qui est au maximum aussi grande que la hauteur de construction (H1) de l'élément de base (14), orientée dans la direction du premier axe de rotation (D1), et un support de doigt (17) du préhenseur de robot (11) présente une hauteur de construction (H3) orientée dans la direction du troisième axe de rotation (D3) qui est au maximum aussi grande que la hauteur de construction (H2) de l'élément intermédiaire (18), orientée dans la direction du deuxième axe de rotation (D2).

4. Préhenseur de robot selon l'une des revendications 1 à 3, **caractérisé en ce que**
- la première articulation rotative (15.1) présente un premier palier entourant l'élément de base (14), en particulier un premier palier à roulement (19.1) avec une bague intérieure, un chemin de bague intérieure pour corps de roulement, une bague extérieure et un chemin de bague extérieure, la bague intérieure étant fixée sur la paroi d'enveloppe extérieure à symétrie de révolution de l'élément de base (14) ou le chemin de bague intérieure étant formé sur la paroi d'enveloppe extérieure à symétrie de révolution de l'élément de base (14),
- la deuxième articulation rotative (15.2) présente un deuxième palier entourant l'élément intermédiaire (18), en particulier un deuxième palier à roulement (19.2) avec une bague intérieure, un chemin de roulement de bague intérieure pour corps roulants, une bague extérieure et un chemin de roulement de bague extérieure, la bague intérieure étant fixée sur la paroi d'enveloppe extérieure à symétrie de révolution de l'élément intermédiaire (18) ou le chemin de roulement de bague intérieure étant formé sur la paroi d'enveloppe extérieure à symétrie de révolution de l'élément intermédiaire (18), et
- la troisième articulation rotative (15.3) présente un troisième palier entourant le support de doigt (17), en particulier un troisième palier à roulement (19.3) avec une bague intérieure, un chemin de roulement de bague intérieure pour corps roulants, une bague extérieure et un chemin de roulement de bague extérieure, la bague intérieure étant fixée sur la paroi d'enveloppe extérieure à symétrie de révolution du support de doigt (17) ou le chemin de roulement de bague intérieure étant formé sur la paroi d'enveloppe extérieure à symétrie de révolution du support de doigt (17).

5. Préhenseur de robot selon l'une des revendications 1 à 4, **caractérisé en ce que** le premier moteur d'entraînement (A1) est agencé à l'intérieur du corps de base de préhenseur (12) ou de l'élément de base (14), le deuxième moteur d'entraînement (A2) est agencé à l'intérieur de l'élément de base (14), de l'élément intermédiaire (18) ou du corps de base du préhenseur (12),
et/ou le troisième moteur d'entraînement (A3) est agencé à l'intérieur de l'élément intermédiaire (18), du support de doigt (17), de l'élément de base (14), du support de doigt (17) ou du corps de base de la préhenseur (12).

6. Préhenseur de robot selon l'une des revendications 1 à 5, **caractérisée en ce que** le premier moteur d'entraînement (A1) est réalisé pour un pilotage à régulation de force et/ou à régulation de couple, le deuxième moteur d'entraînement (A2) est réalisé pour un pilotage à régulation de force et/ou à régulation de couple, et/ou le troisième moteur d'entraînement (A 3) est réalisé pour un pilotage à régulation de force et/ou à régulation de couple.

7. Préhenseur de robot selon l'une des revendications 1 à 6, **caractérisé en ce que** le premier doigt de préhension (16.1) présente, dans une section transversale perpendiculaire à son extension longitudinale, un contour de section transversale différent de la forme circulaire.

8. Préhenseur de robot selon l'une des revendications 1 à 7, **caractérisé en ce que** l'autre doigt de préhension est un deuxième doigt de préhension (16.2) ou un troisième doigt de préhension (16.3) qui est fixé de manière rigide au corps de base de préhenseur (12).

9. Préhenseur de robot selon l'une des revendications 1 à 7, **caractérisé en ce que** l'autre doigt de préhension est un deuxième doigt de préhension (16.2) ou un troisième doigt de préhension (16.3) qui est monté sur le corps de base de préhenseur (12) de manière à pouvoir tourner de manière automatisée autour d'un axe de rotation orienté parallèlement à son axe longitudinal.

10. Préhenseur de robot selon la revendication 9, **caractérisé en ce que** le deuxième doigt de préhension (16.2) et/ou le troisième doigt de préhension (16.3) est monté sur le corps de base de préhenseur de manière à pouvoir tourner de façon automatisée autour du premier axe de rotation de l'élément de base (14).

11. Préhenseur de robot selon la revendication 9, **caractérisé en ce que** le deuxième doigt de préhension (16.2) est fixé sur le corps de base du préhenseur (12) de telle sorte que le contour extérieur du deuxième doigt de préhension (16.2) se trouve entièrement à l'intérieur d'une surface cylindrique enveloppante (HZ) déterminée par la périphérie extérieure du corps de base du préhenseur (12), et/ou le troisième doigt de préhension (16.3) est fixé sur le corps de base du préhenseur (12) de telle sorte que le contour extérieur du deuxième doigt de préhension (16.2) se trouve entièrement à l'intérieur de la surface cylindrique enveloppante (HZ) déterminée par la périphérie extérieure du corps de base du préhenseur (12).

12. Préhenseur de robot selon l'une des revendications 1 à 11, **caractérisé en ce que** le premier doigt de préhension (16.1) est monté sans entraînement sur le support de doigt (17) ou sur l'élément intermédiaire (18) de manière à pouvoir tourner autour d'un axe de rotation passif.

13. Préhenseur de robot selon l'une des revendications 1 à 12, **caractérisé en ce que** le premier doigt de préhension (16. 1), le deuxième doigt de préhension (16.2) et/ou le troisième doigt de préhension (16.3) sont fixés sur le support de doigt (17) à l'aide d'un levier (20), le levier orientant en alignement le premier doigt de préhension (16. 1) ou le deuxième doigt de préhension (16.2) et/ou le troisième doigt de préhension (16. 3) avec son extension longitudinale au moins sensiblement ou exactement de manière parallèle au troisième axe de rotation (D3) de la troisième articulation rotative (15.3), et ceci à une distance (A) notamment variable du troisième axe de rotation (D3), la troisième articulation rotative (15.3) portant le support de doigt (17).

14. Préhenseur de robot selon l'une quelconque des revendications 1 à 13, **caractérisé en ce que** le premier doigt de préhension (16. 1) et/ou le deuxième doigt de préhension (16.2) et/ou le troisième doigt de préhension (16.3) présente au moins une portion de paroi d'enveloppe extérieure (21) qui, par rapport à un axe central du premier doigt de préhension (16.1), du deuxième doigt de préhension (16.2) et du troisième doigt de préhension (16.3), respectivement, s'étendant sensiblement parallèlement à l'extension longitudinale du premier doigt de préhension (16.1), du deuxième doigt de préhension (16.2) et du troisième doigt de préhension (16.3), respectivement, est réalisée de manière réglable dans sa distance par rapport à cet axe central (Z).
